(19) Europäisches Patentamt
European Patent Office
Office européen des brevets

(11) **EP 1 604 529 B1**

(12) **FASCICULE DE BREVET EUROPEEN**

(45) Date de publication et mention
de la délivrance du brevet:
**17.01.2007 Bulletin 2007/03**

(21) Numéro de dépôt: **04742301.7**

(22) Date de dépôt: **19.03.2004**

(51) Int Cl.:
***H04N 7/26*** (2006.01)

(86) Numéro de dépôt international:
**PCT/FR2004/000689**

(87) Numéro de publication internationale:
**WO 2004/086769 (07.10.2004 Gazette 2004/41)**

(54) **PROCEDES ET DISPOSITIFS DE CODAGE ET DE DECODAGE D'UNE SEQUENCE D'IMAGES PAR DECOMPOSITION MOUVEMENT/TEXTURE ET CODAGE PAR ONDELETTES**

VERFAHREN UND EINRICHTUNGEN ZUR CODIERUNG UND DECODIERUNG EINER BILDSEQUENZ MITTELS BEWEGUNGS-/TEXTURZERLEGUNG UND WAVELET-CODIERUNG

METHODS AND DEVICES FOR ENCODING AND DECODING A SEQUENCE OF IMAGES BY MEANS OF MOTION/TEXTURE DECOMPOSITION AND WAVELET ENCODING

(84) Etats contractants désignés:
**AT BE BG CH CY CZ DE DK EE ES FI FR GB GR HU IE IT LI LU MC NL PL PT RO SE SI SK TR**

(30) Priorité: **20.03.2003 FR 0303449**

(43) Date de publication de la demande:
**14.12.2005 Bulletin 2005/50**

(73) Titulaire: **FRANCE TELECOM**
**75015 Paris (FR)**

(72) Inventeurs:
- **CAMMAS, Nathalie**
  **F-35700 Rennes (FR)**
- **PATEUX, Stéphane**
  **F-35760 Saint Grégoire (FR)**
- **LAURENT, Nathalie**
  **F-35630 Vignoc (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
EP-A- 0 614 318          WO-A-01/39503
US-A- 5 974 183

- HARIDASAN R ET AL: "Scalable coding of video objects" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31 mai 1998 (1998-05-31), pages 289-292, XP010289442 ISBN: 0-7803-4455-3
- MARQUANT G: "THESE REPRESENTATION PAR MAIILAGE ADAPTATIF DEFORMABLE POUR LA MANIPULATION ET LA COMMUNICATION D'OBJETS VIDEO" THESE L'UNIVERSITE DE RENNES,, no. 2453, décembre 2000 (2000-12), pages 5-17,19-77,79-163,165-267,269-296, XP001059069 cité dans la demande
- CAMMAS N ET AL: "FINE GRAIN SCALABLE VIDEO CODING USING 3D WAVELETS AND ACTIVE MESHES" PROCEEDINGS OF THE SPIE, SPIE, BELLINGHAM, VA, US, vol. 5022, 21 janvier 2003 (2003-01-21), pages 358-365, XP008024465 ISSN: 0277-786X
- ANTOINE J-P ET AL: "Shape characterization with the wavelet transform" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 62, no. 3, 1 novembre 1997 (1997-11-01), pages 265-290, XP004107325 ISSN: 0165-1684

• **HAN S-C ET AL: "SPATIOTEMPORAL SUBBAND/ WAVELET CODING OF VIDEO WITH OBJECT-BASED MOTION INFORMATION" PROCEEDINGS OF THE INTERNATIONAL CONFERENCE ON IMAGE PROCESSING. ICIP 1998. SANTA BARBARA, CA, OCT. 26 - 29, 1997, LOS ALAMITOS, CA: IEEE COMPUTER SOCIETY, US, vol. 2, 26 octobre 1997 (1997-10-26), pages 629-632, XP000912012 ISBN: 0-8186-8184-5**

**EP 1 604 529 B1**

**Description**

**1. Domaine de l'invention**

Le domaine de l'invention est celui du codage, et du décodage d'une séquence d'images vidéo, par exemple en vue de son stockage ou de sa transmission vers au moins un terminal.

Le codage vidéo est utilisé dans de nombreuses applications, qui nécessitent des ressources et des bandes passantes variées et variables. Pour répondre à ces différents besoins, il est intéressant de disposer d'un flux vidéo possédant des propriétés de scalabilité, c'est-à-dire pouvant s'adapter aux ressources et débits disponibles.

L'invention s'inscrit notamment dans ce cadre.

La scalabilité peut s'obtenir notamment par l'utilisation de transformées ondelettes dans un schéma de codage vidéo. On constate en effet que ces deux aspects, ondelettes et scalabilité, permettent chacun de représenter un signal de manière hiérarchique.

**2. Etat de l'art**

**2.1** *Codage vidéo utilisant les ondelettes 3D*

Plusieurs schémas de codage vidéo utilisant des ondelettes ont déjà été présentés dans la littérature. On a notamment proposé d'utiliser des transformées par ondelettes 3D (en trois dimensions), par exemple dans les documents suivants :

- S.J. Choi and J.W. Woods. Motion - Compensated 3-d subband coding of video. IEEE Transactions on Image Processing, 8(2) : 15-167, February 1999 ;
- J.R Ohm. Three dimensional subband coding with motion compensation. IEEE Transactions on Image Processing, 3(5) : 559-571, September 1994 ;
- Secker A. and D. Taubman. Motion - compensated Highly scalable video compression using 3d wavelet transform based on lifting. IEEE 2001.
- D. Taubman and A. Zakhor. Multirate 3d subband coding of video. IEEE transactions on Image processing, 3(5) 572-588, September 1994.

Un des premiers schémas, proposé par Taubman et Zakhor en 1994, effectue une transformée ondelette 3D sur une séquence d'images redressées par rapport à la première image de la séquence. Selon cette technique, le mouvement considéré n'est qu'un mouvement global dans la scène, n'offrant qu'une qualité insuffisante. L'utilisation de mouvements plus complexes, qui présenteraient des zones de contraction et d'expansion, nécessiterait de redresser les images sur des grilles d'échantillonnage non uniformes, et le schéma ne serait alors plus réversible.

D'autres schémas, développés notamment par Ohm en 1994 et Choi et Woods en 1999, utilisent des blocs pour la représentation du mouvement. La transformée ondelette 3D est alors effectuée sur ces blocs, le long de la trajectoire du mouvement.

Cependant, le mouvement par blocs n'est pas continu et fait apparaître des pixels isolés ou doublement connectés à d'autres pixels. Il en résulte des sous-bandes temporelles contenant beaucoup de hautes fréquences. De plus, ces pixels particuliers limitent la longueur du filtre d'ondelette.

Une autre approche, notamment présentée par Taubman et Secker en 2001, utilise les ondelettes 3D en appliquant la forme "lifting" de la transformée temporelle. Selon cette méthode, la transformée temporelle est effectuée en même temps que la compensation en mouvement. L'utilisation du lifting permet d'obtenir une transformée réversible. Cependant, elle nécessite d'avoir connaissance des champs de mouvements directs et inverses. Or, ces champs de mouvement sont coûteux à coder.

L'utilisation de champs de mouvements par blocs implique l'utilisation de filtres courts tels que le 5/3 tronqué. Ce codage de mouvement par blocs, discontinu, introduit en conséquence des hautes fréquences difficiles à coder dans les sous-bandes.

Finalement, J.H. Wilkinson a proposé, dans le brevet US 5,974,183, un schéma de codage prédictif en boucle ouverte pour la compression d séquences d'images MPEG, basé sur une compensation des erreurs au codage utilisant une pondération temporelle.

Plus précisément une analogie avec une transformation ondelette sur l'axe temporel et une décomposition en ondelettes spatiales sont réalisées pour effectuer le codage.

3

**2.2** *Inconvénients de ces techniques antérieures*

Ces différentes approches connues tentent donc d'utiliser des ondelettes le long de l'axe temporel. Cependant, la plupart de ces études utilisent un mouvement par blocs, qui génère des discontinuités lors des compensations en mouvement. A cause de ces discontinuités, les ondelettes temporelles ne décorrèlent pas le signal au mieux. Plus précisément, les discontinuités créent des hautes fréquences dans les sous-bandes, qui sont difficiles à coder ensuite par une ondelette 2D.

**2.3** *Approche Analyse-synthèse prenant en compte le maillage*

Les inventeurs ont présenté, dans les articles "codage vidéo scalable par maillage et ondelettes 3D" (Nathalie Cammas et Stéphane Pateux, Conférence Coresa'03 - Compression et Représentation des Signaux Audiovisuels - Lyon, 16-17 janvier 2003), et "Fine grain scalable video coding using 3D wavelets ad active meshes" (Nathalie Cammas et Stéphane Pateux, Proceedings of the SPIE, SPIE, Bellingham, VA, US, vol. 5022, 21 janvier 2003, pages 358-365) une amélioration de ces techniques, reposant notamment sur une approche de type analyse-synthèse et une représentation précise du mouvement, basé sur des maillages.

En utilisant une telle estimation de mouvement par le maillage, on obtient un bon suivi des déformations de la texture le long de l'axe temporel. La compensation en mouvement par maillages assure en effet une continuité temporelle de la texture, qui n'existe pas avec les autres méthodes de compensation, comme, par exemple, la méthode par blocs. Cette continuité peut alors être exploitée par l'utilisation d'ondelettes, le long de l'axe temporel.

La présente invention concerne plus précisément cette dernière technique de codage, qu'elle vise à améliorer, notamment en réduisant la quantité de données à transmettre, ou à stocker, pour représenter une séquence d'images vidéo.

## 3. Objectifs de l'invention

L'invention a notamment pour objectif de pallier les différents inconvénients des techniques antérieures.

Notamment, un objectif de l'invention est de fournir une technique de codage, permettant de transmettre (ou stocker) plus d'informations pour un débit donné, ou de nécessiter un débit moindre pour une quantité d'informations donnée, par rapport aux techniques mentionnées ci-dessus.

Un autre objectif de l'invention est de proposer un codage vidéo échelonnable, ou scalable, permettant une reconstruction progressive de chaque image ou séquence d'image.

Un autre objectif de l'invention est de fournir une telle technique de codage, présentant de bonnes qualités de robustesse.

Ainsi, un objectif particulier de l'invention est de fournir un taux de compression inférieur ou similaire à celui du codage H264, en offrant en plus la scalabilité et la robustesse.

## 4. Caractéristiques principales de l'invention

Ces objectifs, ainsi que d'autres qui apparaîtront par la suite, sont atteints à l'aide d'un procédé de de codage d'une séquence d'images source, mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes,
caractérisé en ce qu'il comprend les étapes suivantes :

- estimation du mouvement, par exemple à l'aide d'au moins une grille de référence, de façon à obtenir lesdites images de mouvement ;
- projection de chacune desdites images source sur au moins une grille de référence, de façon à obtenir lesdites images de texture, sur lesquelles l'effet du mouvement a été annulé ;
- comparaison entre une image de mouvement et une image estimée correspondante, de façon à obtenir une image de différence de mouvement, dite résidu de mouvement ;
- comparaison entre une image de texture et une image estimée correspondante, de façon à obtenir une image de différence de texture ;
- codage indépendant, par ondelettes, desdits résidus de mouvement et desdits résidus de texture.

Ainsi, on réduit fortement le nombre d'informations à coder, et on obtient donc une augmentation du débit utile ou, à débit constant, une amélioration des images codées et/ou stockées.

L'approche de l'invention permet de traiter indépendamment les signaux de mouvement et de texture, puisque l'effet du mouvement a été supprimé dans les informations de texture. Ces signaux permettent notamment de coder ensuite indépendamment les deux types d'information.

De façon avantageuse, ladite comparaison met en oeuvre une différence avec une image interpolée à partir d'au moins la première et/ou de la dernière image de ladite séquence.

Avantageusement, on effectue un codage temporel de ladite texture, redressée par ledit mouvement préalablement codé selon l'axe temporel, à l'aide d'un codage par ondelettes.

De façon préférentielle, le procédé de l'invention comprend un codage de la texture comprenant un codage temporel par ondelettes suivi d'un codage spatial par ondelettes.

Selon un aspect avantageux de l'invention, on met en oeuvre un codage du mouvement prenant en compte un maillage, et préférentiellement un maillage hiérarchique.

Avantageusement, le codage du mouvement comprend également un codage temporel par ondelettes suivi d'un codage spatial par ondelettes.

Selon un aspect préférentiel de l'invention, lesdites images source sont regroupées par blocs d'images comprenant un nombre variable (N) d'images source.

Ce nombre peut notamment varier en fonction des caractéristiques des images. Il peut par exemple être de l'ordre de 8 images.

Avantageusement, deux blocs d'images successifs comprennent au moins une image commune. En d'autres termes, les blocs se chevauchent.

Dans ce cas, on prévoit avantageusement que la première image d'un bloc d'images n'est pas codée, celle-ci étant identique à la dernière image du bloc d'images précédent.

Cela permet encore d'augmenter le débit utile.

Selon un premier mode de mise en oeuvre, dans chacun desdits blocs d'images, on estime le mouvement de toutes les images d'un bloc d'images à partir de la première image dudit bloc.

On peut notamment mettre en oeuvre une étape de compensation de mouvement par rapport à au moins une grille de référence.

Avantageusement, ladite étape de compensation utilise deux grilles de référence représentant respectivement la première et la dernière images du bloc considéré.

Ainsi, selon un deuxième mode de mise en oeuvre, pour un bloc de N images, les images de 1 à (N+1)/2 sont plaquées sur la grille de référence représentant la première image et les images de (N+1)/2 +1 à N sont plaquées sur la grille de référence représentant la dernière image.

Selon un autre aspect préférentiel de l'invention, le procédé de codage comprend un codage du mouvement mettant en oeuvre une estimation de mouvement multi-résolution, selon laquelle le mouvement est estimé sur au moins deux niveaux de résolution d'image.

Ainsi, l'estimation de mouvement peut avantageusement être effectuée sur au moins deux niveaux dudit maillage hiérarchique.

Bien sûr, l'invention peut également être mise en oeuvre pour un seul niveau de résolution de maillage, par exemple pour un maillage à un niveau irrégulier adapté au contenu.

De façon avantageuse, on prévoit une étape de projection d'une image sur au moins une grille de référence, correspondant à une grille d'échantillonnage définie par la position des noeuds d'un maillage dans une image, de façon à obtenir un masque de texture.

Préférentiellement, on met en oeuvre une approche multi-grille, selon laquelle on associe respectivement une grille de référence spécifique à au moins deux niveaux de hiérarchie d'un maillage hiérarchique.

Dans ce cas, on met avantageusement en oeuvre une pondération des noeuds de maillage entre lesdits niveaux de hiérarchie, par des poids représentatif de la déformation géométrique.

De façon préférentielle, ladite pondération est modifiée lors de la répercussion du déplacement d'un niveau à l'autre (de façon à conserver la structure des maillages inférieurs).

Avantageusement, entre deux niveaux hiérarchiques successifs, correspondant à un maillage grossier et à un maillage fin, les noeuds dudit maillage fin sont représentés par leur coordonnées barycentriques par rapport au triangle du maillage grossier auquel ils appartiennent, ledit maillage fin comprenant d'une part des premiers noeuds, dits noeuds fils directs, dépendant des noeuds dudit maillage grossier et des seconds noeuds, correspondant à un milieu d'arête dudit maillage grossier.

Lesdits noeuds fils directs peuvent alors prennent la valeur de noeuds pères correspondant dudit maillage grossier, et lesdits seconds noeuds peuvent correspondre à une combinaison linéaire entre les quatre noeuds des deux triangles auxquels appartient ladite arête.

Ainsi, avantageusement, si ledit noeud est sur ladite arête, alors seuls les deux noeuds d'extrémité de ladite arête sont pris en compte, et en ce que si ledit noeud n'est pas sur ladite arête, seuls les trois noeuds appartenant au triangle dudit maillage grossier auquel appartient ledit noeud dudit maillage fin.

Selon un autre aspect avantageux, ladite multi-grille peut être adaptée à un maillage en mouvement, à partir d'une initialisation reposant sur une approche géométrique.

Dans ce cas, le procédé comprend avantageusement une étape de détection d'au moins une zone de support d'image restant indéfinie après ladite projection d'une image, du fait de l'utilisation d'une grille de référence correspondant à une autre image, et une étape de remplissage (« padding ») de la ou desdites zones de support d'image indéfinies.

Ladite étape de remplissage peut notamment reposer sur une approche de type analyse-synthèse, l'image à compléter étant analysée, puis synthétisée, pour obtenir par comparaison un résidu.

Préférentiellement, ladite analyse-synthèse est réitérée au moins une fois, sur le résidu obtenu à l'itération précédente.

Le « padding » comprend de façon avantageuse une étape de remplissage spatial pour au moins une image suivie d'une étape de remplissage temporel, par prédiction.

Ladite étape de remplissage peut notamment être assurée par une interpolation.

De façon préférentielle, on applique une antisymétrie aux coefficients d'ondelettes correspondant à un bord d'une image, de façon à simuler un signal à support de longueur infinie.

Selon un autre aspect avantageux de l'invention, les données codées sont réparties en au moins deux couches, une couche basse comprenant des données permettant de reconstruire une image de qualité grossière et une couche haute permettant d'affiner la qualité de ladite image grossière.

Ladite couche basse peut ainsi comprendre un flux de mouvement de bas niveau, comprenant des données de mouvement de la dernière image dudit bloc d'images, et un flux de texture de bas niveau, comprenant des données de texture de la première et de la dernière images dudit bloc d'images.

Ladite couche haute comprend quant à elle avantageusement un flux de mouvement de haut niveau et un flux de texture de haut niveau, correspondant au codage desdits résidus.

Selon un mode de mise en oeuvre particulier de l'invention, le procédé de codage comprend donc les étapes suivantes :

- sélection d'un groupe d'images source ;
- analyse du mouvement dans ledit groupe d'images source, produisant lesdites images de mouvement ;
- analyse de la texture des images source dudit groupe, ladite texture étant plaquée sur les images de mouvement correspondantes, produisant lesdites images de texture ;
- prédiction d'au moins certaines des images de texture dudit groupe d'images source, produisant lesdites images de texture prédite ;
- détermination de résidus de texture, correspondant à la différence entre une image de texture et une image de texture prédite ;
- prédiction d'au moins certaines des images de mouvement dudit groupe d'images mouvement, produisant lesdites images de mouvement prédite ;
- détermination de résidus de mouvement, correspondant à la différence entre une image de mouvement et une image de mouvement prédite ;
- application d'un codage par ondelettes sur lesdits résidus de texture et sur lesdits résidus de mouvement.

L'invention concerne également les signaux générés par un procédé de codage tel que décrit ci-dessus.

Un tel signal représentatif d'une séquence d'images source et obtenu par un mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes. Il comprend des données numériques représentatives d'un codage par ondelettes appliqué sur des images de différence, dites résidus, obtenues par comparaison entre une image de source et une image estimée correspondante.

De façon préférentielle, il est constitué d'au moins deux couches, une couche basse comprenant des données permettant de reconstruire une image de qualité grossière et une couche haute permettant d'affiner la qualité de ladite image grossière.

Avantageusement, ladite couche basse comprend successivement un flux de base, comprenant des données d'initialisation, un premier flux représentatif du mouvement et un premier flux représentatif de la texture, et ladite couche haute comprend successivement un second flux représentatif du mouvement et un second flux représentatif de la texture, lesdits seconds flux correspondant au codage desdits résidus.

Selon un autre aspect, le signal comprend trois champs pour décrire un objet, représentatifs respectivement de son mouvement, de sa texture et de sa forme.

L'invention concerne encore les procédés de décodage d'un tel signal, et/ou correspondant au procédé de codage.

Un tel procédé de décodage comprend avantageusement les étapes suivantes :

- décodage du mouvement, en tenant compte d'au moins certains desdits résidus relatifs au mouvement, pour former des images de mouvement ;
- décodage de la texture, en tenant compte d'au moins certains desdits résidus relatifs à la texture, pour former des images de texture ;
- synthèse d'une séquence d'images décodées, correspondant à ladite séquence d'images source, par projection desdites images de texture sur lesdites images de mouvement.

Préférentiellement, il comprend une étape de mesure de la qualité de ladite séquence d'images décodées, par analyse de la distorsion entre les images de texture originales et les images de texture décodées.

De façon avantageuse, ladite étape de décodage du mouvement comprend les étapes suivantes :

- génération d'un maillage hiérarchique sur la première image ;
- décodage d'informations de mouvement associées à la dernière image, pour déterminer un maillage associé à ladite dernière image ;
- interpolation des images de mouvement intermédiaires.

Préférentiellement, il comprend ensuite une étape de décodage desdits résidus, comprenant une transformation par ondelettes inverse de celle appliquée au codage, et une étape d'addition desdits résidus auxdites images de mouvement intermédiaires interpolées.

De la même façon, ladite étape de décodage de la texture comprend avantageusement les étapes suivantes :

- génération d'une texture pour la première image ;
- décodage d'informations de texture associées à la dernière image, pour déterminer une texture associée à ladite dernière image ;
- interpolation des images de texture intermédiaires.

Selon un aspect particulier, au moins certains desdits blocs d'images, dits blocs « inter », l'étape de génération d'une texture pour la première image prend en compte la dernière image du bloc d'images précédents.

Avantageusement, le procédé de décodage comprend ensuite une étape de décodage desdits résidus, comprenant une transformation par ondelettes inverse de celle appliquée au codage, et une étape d'addition desdits résidus auxdites images de texture intermédiaires interpolées.

Il peut en outre comprendre avantageusement une étape de gestion des retournements générés par ladite estimation du mouvement.

Préférentiellement, il comprend une étape d'arrêt du traitement desdits résidus, lorsqu'un niveau de qualité et/ou une quantité de traitements à effectuer est atteint.

L'invention concerne encore les dispositifs de codage et/ou de décodage mettant en oeuvre les procédés décrits ci-dessus, les serveurs de données, stockant et pouvant transmettre vers au moins un terminal des signaux selon l'invention, les supports de données numérique pouvant être lu par un terminal et portant de tels signaux, ainsi que les programmes d'ordinateur comprenant des instructions pour mettre en oeuvre un codage et/ou un décodage selon l'invention.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :

- la figure 1 est un organigramme simplifié illustrant le principe général du codage selon l'invention ;
- la figure 2 présente un organigramme plus détaillé du schéma de codage de la figure 1 ;
- la figure 3 est un exemple de maillage hiérarchique ;
- la figure 4 illustre le principe de l'estimation multi-résolutions et hiérarchique selon l'invention ;
- la figure 5 montre la progression dans les niveaux de hiérarchie et de résolution ;
- la figure 6 est un organigramme présentant le principe du "padding" par ondelettes ;
- la figure 7A À 7F illustrent le principe de la projection d'une image k sur une image i ;
- la figure 8 représente le principe de l'interpolation bi-linéaire ;
- la figure 9 illustre la projection sur des grilles de référence ;
- la figure 10 illustre le padding 2D par calculs de basses-fréquences ;
- la figure 11 présente un exemple de signal résidu de texture (ou de mouvement) ;

- la figure 12 est un algorithme présentant le codage de la texture ;
- la figure 13 est un algorithme présentant le codage du mouvement ;
- la figure 14 illustre l'application de vecteurs non cohérents à un maillage ;
- la figure 15 donne un exemple de fusion de sommets ;
- la figure 16 illustre un exemple de maillage "n-manifold" ;
- la figure 17 illustre un exemple de maillage à support correct ;
- la figure 18 présente l'opérateur de prolongement utilisé selon l'invention ;
- les figures 19A et 19B présentent respectivement une grille grossière et une grille fine pouvant être utilisées dans une version simplifiée de l'invention ;
- la figure 20 illustre le principe du multigrille géométrique ;
- la figure 21 présente une étape de lifting selon l'invention ;
- la figure 22 illustre le principe de l'analyse-synthèse d'un signal selon l'invention ;
- la figure 23 présente un autre schéma d'analyse-synthèse, avec matrices polyphases ;
- les figures 24 à 27, commentées en annexe 4, concernent certains aspects de l'estimation multigrille ;
- la figure 28 présente un synoptique du principe de suivi d'un maillage au cours du temps ;
- la figure 29 illustre la construction d'une mosaïque vidéo au cours du temps ;
- la figure 30 présente le schéma de codage par analyse-synthèse ;
- la figure 31 illustre la structure du flux vidéo généré selon l'invention.

## 6. Modes de réalisation préférentiels

### 6.1 *Principe général de l'invention*

La technique de codage selon l'invention, assure un codage de séquence vidéo par maillages et ondelettes 3D.

Cette séquence est d'abord découpée en groupe de N images, appelé par la suite GOP ("group of pictures" en anglais, pour « groupe d'images »). Le nombre d'images par GOP peut varier, notamment selon l'intensité du mouvement dans la séquence. En moyenne, dans l'exemple décrit ci-après, la taille d'un GOP est de huit images.

Le codage repose sur une approche de type analyse-synthèse. Une première phase est l'estimation du mouvement par GOP, à l'aide de maillages déformables. La deuxième phase est le codage du mouvement et de la texture du GOP.

Le mouvement est estimé dans les images 1 et t du GOP, où t est une image du GOP et 1 la première image du GOP. L'utilisation des ondelettes 3D et la nature d'analyse-synthèse du schéma de codage permettent d'offrir une scalabilité naturelle.

L'approche basée sur les maillages permet d'éviter les effets de blocs habituels aux techniques antérieures, grâce à l'utilisation de champs de mouvement continus, et ainsi d'améliorer la prédiction temporelle.

Le codage de l'invention offre donc un flux scalable et progressif. Selon l'approche analyse-synthèse, l'analyse consiste à traiter un groupe d'images appartenant à une fenêtre temporelle, dans lequel le mouvement est estimé. Le modèle de compensation obtenu permet de compenser les images de la première image de la fenêtre vers la dernière image. Les images peuvent ensuite être plaquées sur des grilles de référence, afin des séparer les informations de mouvement et de texture.

Ces informations peuvent ensuite être codées séparément en deux couches :

- une couche de base qui permet de représenter le signal vidéo échantillonné, et qui contient les informations des images extrêmes de fenêtre temporelle ;
- les images internes à la fenêtre pouvant alors être interpolée entre ces deux images extrêmes ;
- au moins une couche subséquente de réhaussement pouvant être rajoutée à la couche de base afin d'améliorer la qualité de la séquence vidéo reconstruite. Les couches de réhaussement apportent un raffinement de texture et/ou de mouvement aux images internes extrêmes de la fenêtre.

La séquence vidéo est reconstruite par une phase de synthèse, qui reprojette les images de texture sur leur grille d'échantillonnage original. La séparation de mouvement et de la texture dans la stratégie de codage permet de coder le mouvement avec pertes, le gain en débit pouvant alors être répercuté sur le codage de la texture. L'utilisation des ondelettes dans le codage de la couche haute permet par ailleurs d'offrir un flux scalable.

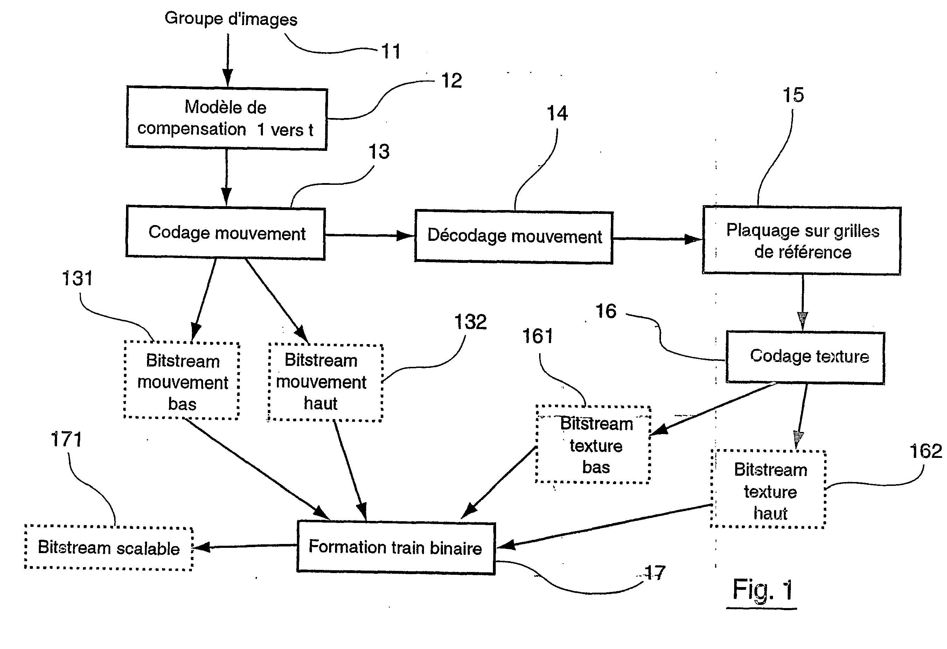

**6.2** *Schéma général du codage (figure 1)*

• Figure 1

La figure 1 donne une vue générale du principe d'un procédé de codage, et d'un codeur selon l'invention.

Ainsi que précisé précédemment, chaque groupe d'images 11 subit tout d'abord une étape d'estimation de mouvements 12, basée sur un modèle de compensation 1 vers t, puis une étape 13 de codage du mouvement livrant d'une part, un flux "bitstream" de bas niveau 131 et un flux "bitstream" 132 de haut niveau ou de réhaussement.

Selon le principe d'analyse-synthèse, les données représentatives du mouvement sont redécodées lors du codage, dans une étape 14 de décodage du mouvement. L'étape 15 de plaquage de la texture sur des grilles de référence délivre les informations relatives à cette texture, qui sont ensuite codées (16), dans deux flux 161 et 162, correspondant respectivement à un flux "bitstream" de texture de bas niveau et un flux "bitstream" de texture de haut niveau.

Les différents flux 131, 132, 161, 162 qui sont ensuite organisés pour former un train binaire délivre un flux destiné à être transmis et/ou stocké.

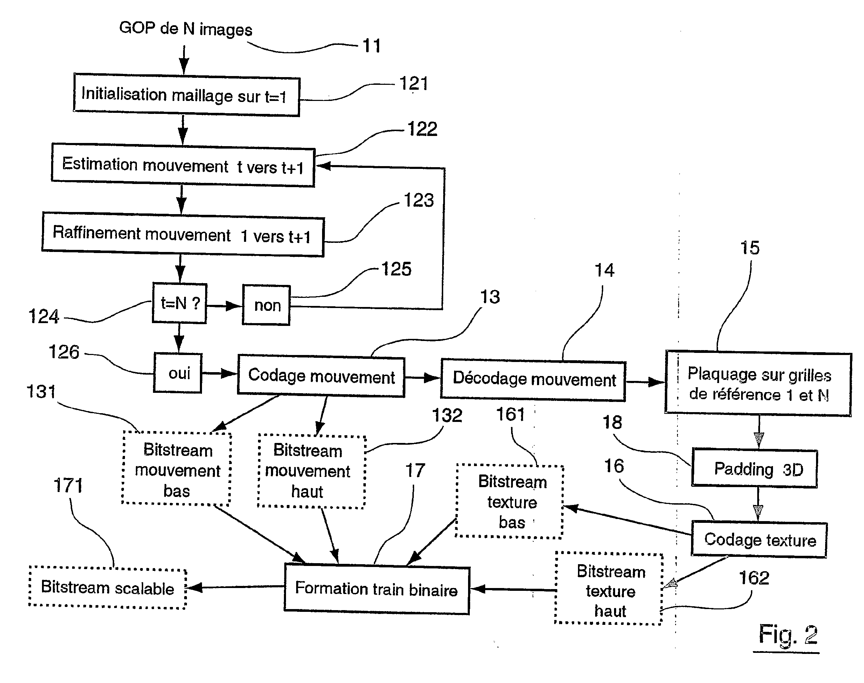

La figure 2 est une version plus détaillée du schéma de la figure 1, dans laquelle les étapes de compensation 12 et de codage 16 la texture sont plus détaillées. Elle est commentée plus en détail par la suite.

• Principe du codage

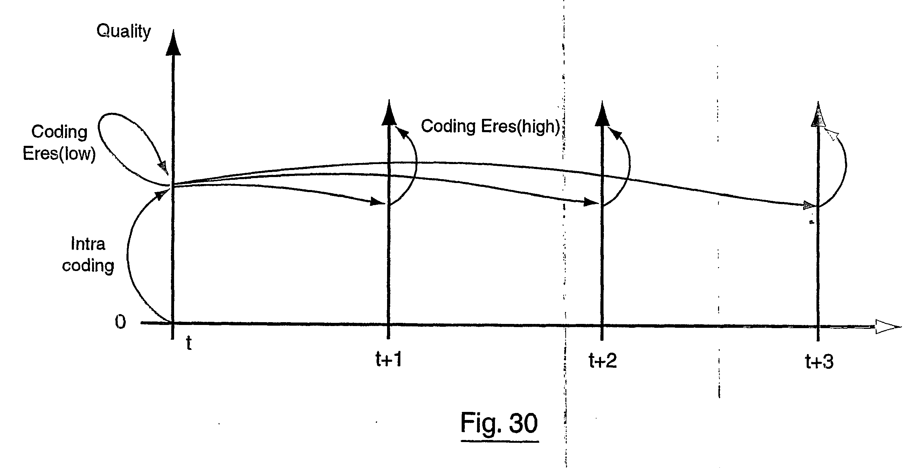

Le schéma de codage proposé est schéma de type analyse-synthèse. Chaque image est rendue par l'intermédiaire d'une texture plaquée à l'aide du maillage (de façon similaire à ce qui peut se faire en synthèse d'images). L'information de texture ainsi que l'information d'évolution du maillage sont obtenues par l'intermédiaire de l'algorithme d'estimation de mouvement défini précédemment ainsi que la technique de construction d'images mosaïques, comme illustré sur la figure 30.

Chaque image est restituée par l'intermédiaire d'une texture dynamique (i.e. la mosaïque dynamique créée précédement) plaquée à l'aide du maillage déformable. La texture dynamique est codée par l'intermédiaire d'une représentation ondelette 3D. L'information de déformation du maillage est également codé par une ondelette 3D. Un niveau de raffinement peut également être ajouter afin de venir raffiner séparément chaque image.

Ce schéma de codage offre de nombreux intérêts. Tout d'abord, il exploite au maximum les corrélations spatio-temporelles présentes au sein de la vidéo (notamment au niveau des corrélations temporelles).

Par ailleurs, il offre la possibilité de découpler l'information de mouvement de l'information de texture au niveau du décodeur. Ainsi un codage avec pertes des informations de déformations du maillage peut être réalisé sans pour autant apporter de dégradation visuelle. Par exemple, on peut ainsi tolérer des erreurs de position d'un pixel dans l'image sans pour autant avoir de gêne visuelle. Dans un schéma de codage classique en boucle fermée, il serait alors nécessaire de corriger cette erreur de mouvement via le codage de la texture.

Le gain potentiel sur le codage de l'information de mouvement est particulièrement important, car lors d'application à bas débit (comme par exemple 256kbit/s pour du CIF à 30 Hz, l'information de mouvement peut occuper de l'ordre de 30 à 40 % du débit total dans un schéma de type H263).

Afin de coder les champs d'information de texture et de mouvement, une technique de codage par ondelettes 3D est utilisée. Cette technique est basée sur l'utilisation du codeur ondelettes JPEG2000 pour la texture qui permet de réaliser une optimisation débit-distorsion du codage tout en offrant une scalabilité maximale (spatiale et SNR). Le codeur JPEG2000 étant à la base un codeur d'images 2D, le codage par ondelettes 3D est obtenu en lui procurant des images multi-composantes, les composantes représentant les différentes sous-bandes temporelles du volume d'information 3D considéré.

• Structure du codage et scalabilité

Afin de coder une séquence vidéo, celle-ci est tout d'abord découpée en GOP (Group of Picture). Sur chaque GOP, l'information de mouvement et de texture sont codés séparément, et de façon scalable. De façon similaire à la structure de codage de MPEG pour les images, on distingue deux types de GOP : les GOP Intra et les GOP Inter. Un GOP Intra est un GOP décodable de façon indépendante des autres GOP (comme par exemple le premier GOP de la séquence). Un GOP Inter est un GOP codé en différentiel par rapport au GOP précédent (le but de ce codage Inter est d'améliorer la compression en évitant de coder une image Intra en début de GOP).

Pour chacun de ces GOP, le maillage utilisé sur la première image est un maillage régulier, il est donc connu au codeur et décodeur et n'a pas donc besoin d'être codé (le coût des paramètres le définissant comme le nombre de niveau de hiérarchie ou bien encore la taille des mailles, peuvent en effet être négligés). La première image du GOP est soit codée en Intra (cas d'un GOP Intra), soit récupérée à partir du GOP précédent (les GOP Inter ont en commun leur première image avec le GOP précédent).

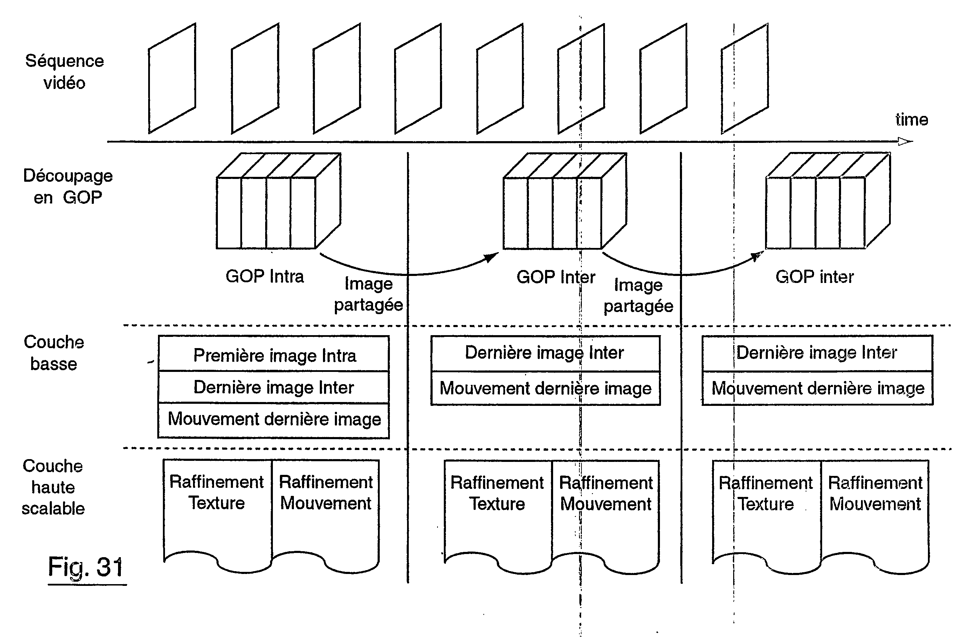

Afin de proposer une scalabilité maximale, les informations définissant la dernière image sont tout d'abord codées (déformations du maillage, variations de texture sur la mosaïque entre la première image reconstruite du GOP et la dernière image du GOP). Enfin les informations résiduelles sont codées par une ondelette 3D avec une technique de codage scalable (cf. JPEG2000). La figure 31 résume ces différents niveaux de représentation.

La couche basse peut être similaire à une couche basse de type IPPPP d'un schéma MPEG. La couche haute scalable du bitstream vient apporter une amélioration progressive sur les images intermédiaire et extrémité(s) des GOP.

• Codage de l'information de texture

Comme présenté sur la figure 31, l'information de texture sur un GOP est codé en deux temps. Dans un premier temps, une couche basse est codée consistant en le codage de la première image (si l'on est sur un GOP Intra), et du codage de la texture de la dernière image en mode différentiel. Dans un second temps, le résidu est quant à lui codé via une ondelette 3D.

L'information résiduelle à coder est définie pour chaque image du GOP allant de l'instant $t_0$ à l'instant $t_1$ comme

étant l'image : $R_t = I_t - \left[ \dfrac{t_1 - t}{t_1 - t_0} I_{t_0}^{low} + \dfrac{t - t_0}{t_1 - t_0} I_{t_1}^{low} \right]$. Une transformée ondelette temporelle est alors définie sur ces images de résidus (utilisation du filtre de type Daubechies 9,7). Les images considérées pour cette transformée ondelettes sont toutes les images de résidu pour le GOP (excepté l'image du résidu de la première image pour un GOP Inter). Les images des différentes sous-bandes temporelles sont par la suite codée via le codeur JPEG2000 en définissant chacune des sous-bandes temporelles comme étant une composante de l'image à coder.

Du fait que la compensation du mouvement a été réalisée au préalable, il n'est plus nécessaire de prendre en compte la présence du mouvement dans le codage.

Au niveau du décodage, les informations de couche basse sont dans un premier temps décodées, puis les informations de la couche haute (informations dépendant du type de scalabilité utilisé pour le codeur). On ajoute alors les incréments provenant de la couche haute aux informations décodées à partir de la couche basse.

• Codage de l'information de mouvement

L'information de mouvement est codée de façon similaire à l'information de texture. Au niveau de la couche basse, la position du maillage est codée uniquement pour la dernière image du GOP. Au niveau de la couche haute, un résidu est calculé sur les positions du maillage via une interpolation linéaire de la position des noeuds aux extrémités du GOP.

Le codage du déplacement dans la couche basse est réalisé via un codage de type DPCM et en utilisant une quantification scalaire uniforme. Pour se faire, un codeur de type JPEG-LS a été adapté.

Sur la couche haute, la transformation ondelette temporelle est dans un premier temps réalisée pour chaque noeud à l'aide de filtre de Daubechies 9,7. Cette transformée temporelle donne un ensemble de nuages de valeurs correspondant à chaque sous-bande temporelle. Ces nuages de valeurs correspondent aux valeurs associées aux noeuds du maillage.

Similairement à ce qui a été proposé dans [Marquant-2000], une transformée ondelette basée maillage est réalisée sur ces valeurs afin d'obtenir des sous-bandes spatiales. Les sous-bandes spatio-temporelles sont par la suite codées en plan de bit à l'aide d'un codeur arithmétique contextuel. Une optimisation débit-distorsion est réalisée afin de définir pour chaque sous-bande spatio-temporelle le niveau de plan de bit final retenu pour le codage (technique similaire à l'allocation de débit réalisé par JPEG 2000 où l'on utiliserait des blocs EBCOT de grande taille).

Dans la première phase de l'étude, le schéma de codage de l'information de mouvement était basé sur le codage du maillage de façon hiérarchique et en utilisant un maillage adapté afin d'obtenir de bon taux de compression. L'utilisation des ondelettes peut être vue en fait comme une méthode généralisant ce type de codage. La quantification laisse apparaître des zones non codées dans l'arbre de hiérarchie. L'avantage de l'approche ondelette est de fournir une scalabilité fine ainsi qu'une optimisation débit-distorsion adéquate, ce qui était relativement difficile à définir dans l'approche précédente.

### 6.3 Estimation du mouvement

La première étape du schéma de codage est l'estimation du mouvement. Les trois points suivants présentent différentes méthodes d'estimation du mouvement entre deux images successives. Le dernier point présente la méthode d'estimation retenue pour notre codeur.

• Estimation mouvement (rappels)

Le mouvement est estimé entre deux images successives t et t+1 à l'aide des maillages déformables. Le principe général d'une estimation de mouvement consiste en la minimisation d'une fonctionnelle

$$\sum_{p \in \Omega} \rho(I(p,t) - I(p - dp, t-1)),$$ avec $\Omega$ le support d'estimation, $\rho$ la métrique d'erreur, la plus utilisée est $\rho(r) = r^2$,

I(p,t) la valeur de l'image I au point p et à l'instant t, dp le champ de mouvement dense. dp peut s'écrire : $\sum_i w_i(p) dp_i$

où $w_i(p)$ représentent les coordonnées de p par rapport aux noeuds i, $d_{pi}$ représente le déplacement associé au noeud i.

Un algorithme de minimisation de la fonctionnelle est décrit dans la thèse de Marquant00 (« Représentation par maillage adaptatif déformable pour la manipulation et la communication d'objets vidéos », Gwenaëlle Marquant. Thèse de l'université de Rennes 1 soutenue le 14 décembre 2000). La minimisation est effectuée sur les noeuds du maillage, c'est-à-dire que l'on cherche les vecteurs déplacements $d_{pi}$ des noeuds de t à t+1.

L'énergie est minimisée par une descente de gradient (type Gauss-Seidel), de manière itérative. Le système à résoudre est de la forme :

$$\sum_{p \in I} \left\{ \Psi(dfd(p)) w_i(p) \nabla I_x(p - dp, t-1) \left[ \sum_j w_j(p) \left[ \nabla I(p - dp, t-1) \Delta dp_i \right] \right] \right\} = \sum_{p \in I} \left\{ \Psi(dfd(p)) w_i(p) \nabla I_x(p - dp, t-1).dfd(p) \right\}$$

$$\sum_{p \in I} \left\{ \Psi(dfd(p)) w_i(p) \nabla I_y(p - dp, t-1) \left[ \sum_j w_j(p) \left[ \nabla I(p - dp, t-1) \Delta dp_i \right] \right] \right\} = \sum_{p \in I} \left\{ \Psi(dfd(p)) w_i(p) \nabla I_y(p - dp, t-1).dfd(p) \right\}$$

$$\forall i, dfd(p) = I(p,t) - I(p - dp, t-1), \Psi(r) = \rho'(r)\big/r$$

Les inconnues de ce système sont les $\Delta dp_i$. Ce système est un système linéaire, du type A.X=B et creux. La solution peut être obtenue par une technique de gradient conjugué, rapide et robuste.

• Estimation multi-résolution et hiérarchique

Dans le cas du codeur de l'invention, l'estimation du mouvement peut également se faire par maillage multi-résolution et hiérarchique. Cette technique a pour but d'assurer une meilleure convergence du système. En effet lors de fort mouvement, la technique de minimisation précédente peut ne pas converger, de plus l'utilisation de maillages très fins provoque une instabilité du système due à un trop grand nombre de paramètres dans le système.

La technique d'estimation de mouvement par maillage hiérarchique consiste à générer un maillage hiérarchique sur les images t et t+1 et à estimer le mouvement sur différents niveaux de maillage.

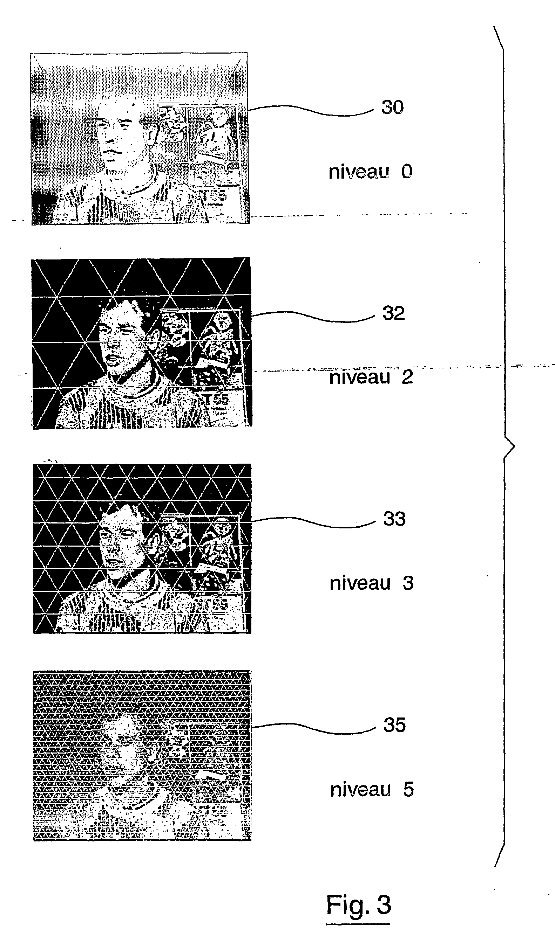

La figure 3 montre un exemple de maillage hiérarchique. La représentation hiérarchique est constituée de plusieurs niveaux de représentation, le niveau le plus bas 30 (niveau 0 sur la figure) possède un champ grossier (3 noeuds seulement pour définir le maillage).

En allant vers les niveaux plus fins 32, 33, 35, le champ se densifie progressivement et, le nombre de noeuds du maillage croît. La qualité du mouvement varie avec les niveaux, le niveau bas 30 représentant le mouvement dominant de la scène, et les niveaux fins affinant le mouvement dominant et représenter les mouvements locaux. Le nombre de niveaux du maillage hiérarchique est un paramètre réglable de la phase d'estimation, il peut varier selon la séquence à estimer.

La technique d'estimation multi-résolution consiste à estimer le mouvement à différents niveaux de résolution des images. Le mouvement est d'abord estimé entre les images à la plus faible résolution, puis il est raffiné en utilisant des images de plus en plus fines. Comme déjà mentionné, l'invention peut s'appliquer également dans le cas d'un maillage à un seul niveau, par exemple irrégulier et adapté au contenu.

L'utilisation de faibles résolutions permet de limiter l'amplitude du mouvement, ainsi un mouvement de grande amplitude à la résolution fine de l'image aura une amplitude faible à la résolution grossière. Une pyramide d'images filtrées et décimées est construite à partir des images t et t+1, puis le mouvement est estimé du niveau grossier vers les niveaux plus fins.

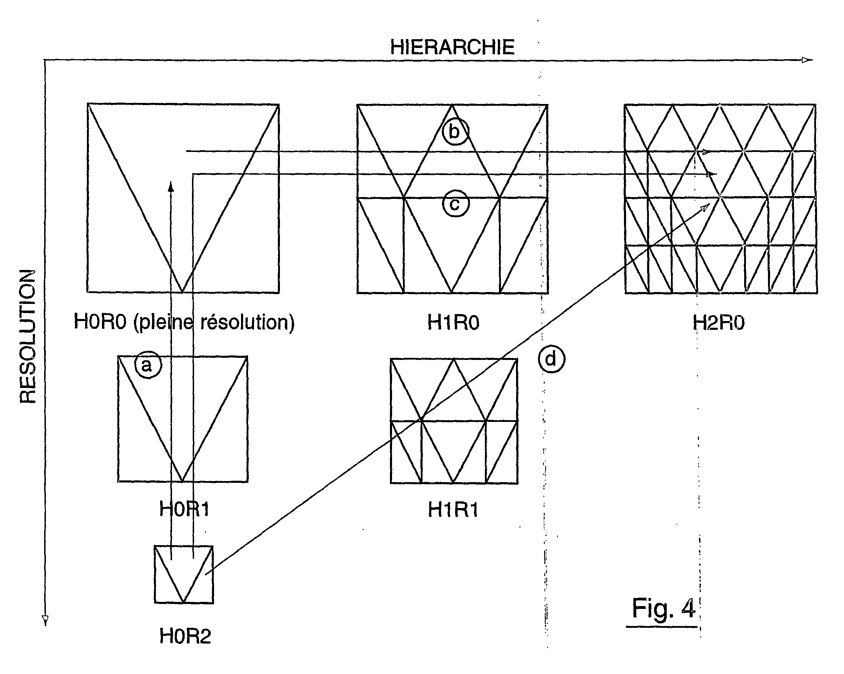

L'estimation de mouvement multi-résolution et hiérarchique, dont un exemple est présenté en figure 4, couple les deux techniques précédentes. Dans un premier temps, l'estimation est effectuée sur un maillage et un niveau de résolution grossiers. Ensuite, les niveaux de résolution et de hiérarchie du maillage sont affinés afin de tendre vers la fonctionnelle correspondant à l'image pleine résolution avec un maillage fin.

La figure 4 montre les différentes possibilités d'affinage du maillage et de la résolution.

L'approche -a- correspond à l'approche multi-résolution seule, et l'approche -b- à l'estimation hiérarchique seule. L'approche -c- permet d'estimer, grâce à la multi-résolution, les mouvements de grande amplitude sur le niveau grossier et de raffiner ce mouvement localement à l'aide de la hiérarchie de maillage. L'approche d est une autre approche combinant multi-résolution et maillage hiérarchique, son avantage est d'utiliser des niveaux de résolution adéquats par rapport à la taille des triangles du maillage. Le principe de cette approche multi-résolution hiérarchique pour l'estimation de mouvement a été développée dans la thèse de Marquant00 déjà mentionnée.

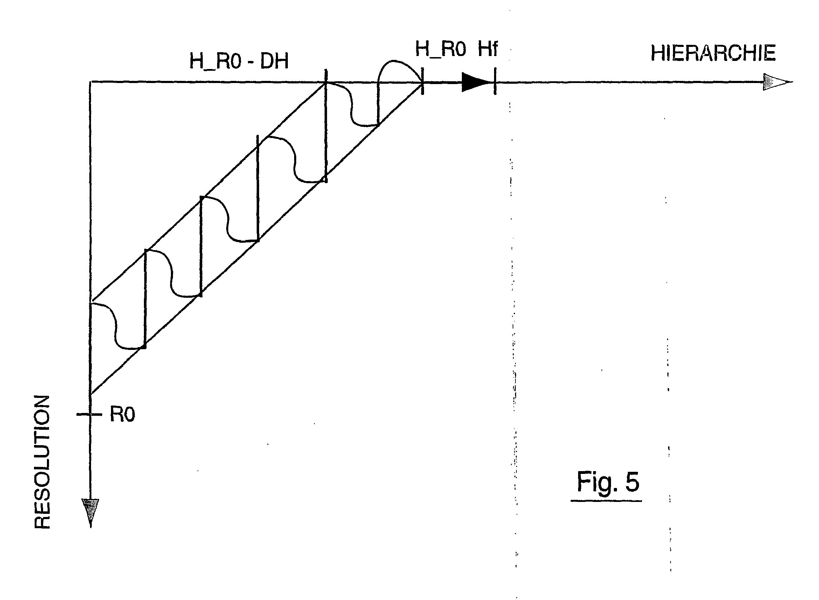

La figure 5 montre l'approche retenue pour l'estimation de mouvement, selon un mode de réalisation préférentiel de l'invention. Cette technique permet de prendre en compte les différents types de mouvement que l'on peut rencontrer. Le paramètre R0 est le niveau de résolution le plus grossier utilisé, H_R0 contrôle l'amplitude des mouvements locaux estimés, DH permet de limiter le biais lié à une estimation sur une image de faible résolution, Hf représente le niveau de hiérarchie le plus fin.

Ces paramètres dépendent du type de séquence. Un jeu de paramètres fixes donnant de bons résultats est le suivant : Hf est défini afin d'avoir la finesse de maillage désirée pour l'estimation de mouvement, H_R0 = Hf, DH = 2, R0 = 3.

• Estimation multi-grille

Le principe de cette technique est explicité plus loin. Cette technique est couplée à l'approche multi-résolution et hiérarchie de maillage lors de l'estimation de mouvement. L'estimation multi-grille est utilisée pour résoudre les problèmes de sous-optimalité qui apparaîssent lors de l'estimation de mouvement sur maillages non réguliers.

• Combinaison

L'estimation mouvement utilisée dans le codeur est une approche combinant la multi-résolution, la hiérarchie de maillage et le multi-grille, expliquées plus haut. Comme illustré sur la figure 2, le mouvement est estimé (122) entre images successives t et t+1, puis il est raffiné (123) par une estimation entre 1 et t+1, où 1 est la première image du GOP. Le maillage est réinitialisé (121) à la première image du GOP suivant. Cette approche est répétée (124, 125, 126) pour les N images du GOP.

o Padding de mouvement

Le padding correspond à l'extrapolation du mouvement en dehors de la zone définie par l'objet. Le but du padding est ainsi de compléter un signal incomplet par des valeurs proches du signal original. Cette opération apparaît nécessaire dès que l'on possède un signal incomplet et que l'on souhaite le traiter comme un signal complet.

Dans le cadre de l'estimation de mouvement, cette opération intervient à la fin de l'estimation du mouvement entre chaque image. En effet, à l'intérieur d'un GOP, l'estimation est relancée à chaque fois à partir du maillage déformé issue de la précédente estimation, lorsque des mailles sortent du domaine de définition de l'image, elles gardent leur forme déformée. Or, ensuite lorsque ces mailles entrent de nouveau dans le domaine de définition (mouvement d'aller-retour dans l'image), l'estimation suivante est de meilleure qualité si les mailles qui rentrent sont homogènes, c'est-à-dire si elles ne sont plus déformées.

Une opération de padding de mouvement est alors appliquée à chaque fin d'estimation afin de lisser les mailles situées en dehors du domaine de définition de l'image.

Le principe du padding peut être le même quelque soit le type d'information que l'on souhaite compléter, texture ou mouvement. Il est semblable à l'approche multigrille vue plus loin. Le principe est donc celui d'analyse-synthèse, et on utilise une représentation ondelette hiérarchique de l'information.

Si s est le signal à compléter, on cherche $\hat{s}$ une approximation du signal telle que $\hat{s} = \sum_k c_k \varphi_k$, avec $\varphi_k$ une base de fonctions orthonormales.

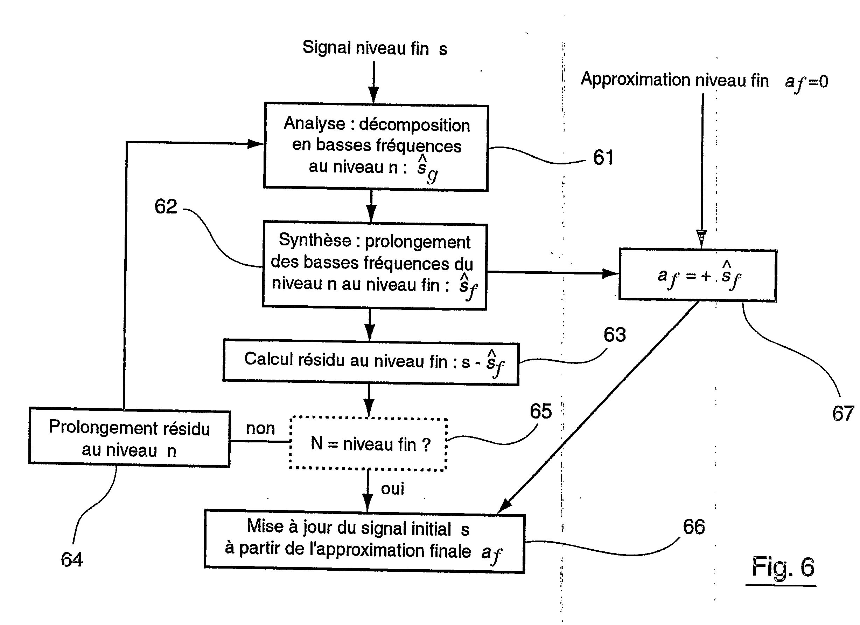

Pour cela, on minimise la fonctionnelle $\|s-\hat{s}\|^2$. Le procédé de minimisation se fait de manière itérative, comme illustré en figure 6.

Une première approximation grossière $\hat{s}_G$ est calculée (analyse 61), puis cette première approximation est prolongée au domaine fin (synthèse 62), pour obtenir (67) $\hat{s}_f$. On calcule (63) le résidu $s - \hat{s}_f$, et on affine ensuite la première approximation en appliquant le processus sur le résidu calculé.

Le processus est réitéré jusqu'à un critère d'arrêt (65) qui teste si le résidu est inférieure à un certain seuil, seuil déterminant la finesse de l'approximation du signal. Le padding consiste alors à remplir les zones du signal initial incomplet par l'approximation complète du signal (66).

Les étapes d'analyse et de synthèse sont dépendantes de la nature du signal à compléter, suivant que le signal représente les informations de mouvement ou de texture. Si le signal représente les informations de mouvement, le signal à compléter est un maillage hiérarchique. On cherche à compléter le niveau de hiérarchie fine, on va alors calculer successivement les approximations sur les niveaux inférieurs, en allant du plus grossier au plus fin.

L'analyse sur un niveau se fait par la résolution du système permettant de déterminer le mouvement ondelette sur ce niveau, c'est-à-dire que l'on cherche le meilleur mouvement à partir des mailles de ce niveau.

L'approximation du niveau fin est ensuite mise à jour avec la solution trouvée. Le résidu du système est calculé sur le niveau fin, et on passe au niveau grossier supérieur, le système du niveau fin étant converti au niveau grossier, et l'on cherche le mouvement ondelette de ce niveau. Au fur et à mesure de la propagation dans les niveaux, l'approximation du niveau fin s'affine. Le processus s'arrête lorsque l'on a résolu le système pour chaque niveau grossier. Enfin, les valeurs non définies dans le maillage fin initial sont mises à jour à partir de l'approximation fine.

L'analyse et la synthèse d'un signal de texture sont expliquées plus loin dans la partie séparation du mouvement et de la texture.

### 6.4 Codage scalable sur deux couches

• Couche de base

Le codage se fait sur deux couches : une couche basse et une couche haute. La couche basse contient les informations concernant la première et la dernière images du GOP. Les images intermédiaires du GOP sont reconstruites par interpolation entre ces deux images.

Le mouvement et la texture sont obtenus par une interpolation linéaire, puis les images sont synthétisées sur leur grille d'échantillonnage à partir du mouvement et de la texture interpolés. L'interpolation linéaire est de la forme : I(t) = a*I(1)+(1-a)*I(N), avec I(1) la première image du GOP, I(N) la dernière image du GOP, I(t) une image du GOP entre 1 et N, a=t/N, Ix représente soit l'information de texture de l'image x, soit l'information de mouvement.

La couche basse est la couche de base qui assure la qualité minimale de reconstruction pour le codeur. Elle représente le signal initial échantillonné d'un pas de N images.

• Couche basse de type P en boucle fermée

La couche basse est de type P, la première image est codée en INTRA, les images suivantes sont codées par prédiction à partir de l'image I ou P précédente codée-décodée pour fonctionner en boucle fermée. La couche basse contient les informations de texture et de mouvement de la dernière image du GOP et les informations de la première si le GOP est un GOP INTRA.

Si le GOP est un GOP INTRA, la couche basse contient l'image I(1) codée. L'image I(N) est codée par prédiction, on code I(N)-Î(1), où Î(1) est l'image I(1) codée-décodée. Si le GOP n'est pas un GOP INTRA, seules les informations de mouvement et de texture de I(N) sont codées dans la couche basse. Dans ce cas, pour prédire I(N), on utilise I(N) du GOP précédent, c'est-à-dire I(1) du GOP courant est égale à Î(N) du GOP précédent, avec Î(N) l'image I(N) codée-décodée.

• Couche de raffinement scalable

La couche haute est une couche de raffinement qui contient les informations de mouvement et de texture des images du GOP. Le raffinement des images extrêmes (première et dernière images du GOP) est un raffinement du codage par rapport à leur version dans la couche basse. Le raffinement des images intermédiaires est l'erreur de prédiction entre ces images et leur interpolation à partir de la couche basse, cette erreur est dI(t)=I(t) - I(1) - a*(I(N)-I(1)).

La couche haute est codée par exemple par un codeur JPEG-2000, offrant un flux scalable.

### 6.5 Séparation du mouvement et de la texture

o Plaquage des images sur une grille de référence

i. Le mouvement est codé séparément de la texture. Le mouvement est donné par la position des noeuds du maillage à chaque instant t, correspondant à chaque image. La texture est récupérée par une opération de plaquage des images sur une grille de référence.

La grille de référence est une grille d'échantillonnage définie par la position des noeuds dans cette image. L'opération de plaquage de l'image i sur l'image k consiste à reconstruire l'image i sur la grille de l'image k, c'est-à-dire à redresser l'image i par rapport à l'image k, l'image reconstruite Ir a la même grille d'échantillonnage que l'image k.

Le support de reconstruction des images peut être plus grand que le support initial de l'image afin de prendre en compte les mouvements qui sortent de l'image, la taille du support est déterminée à l'estimation du mouvement et dépend de l'amplitude de celui-ci. Au moment du plaquage sur la grille de référence, on récupère également un masque de même taille que le support de plaquage et indiquant les pixels du support qui ont été reconstruit.

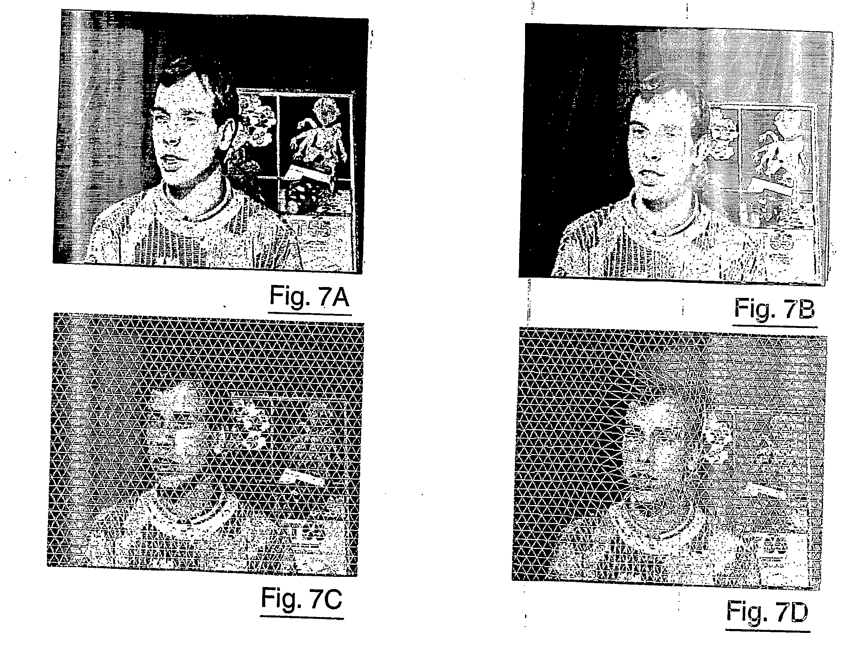

L'exemple illustré par les figures 7A à 7F montre le plaquage d'une image k (figure 7B) sur une image i (figure 7A), connaissant le mouvement entre i et k (position du maillage à i (figure 7C) et position du maillage à k (figure 7D)).

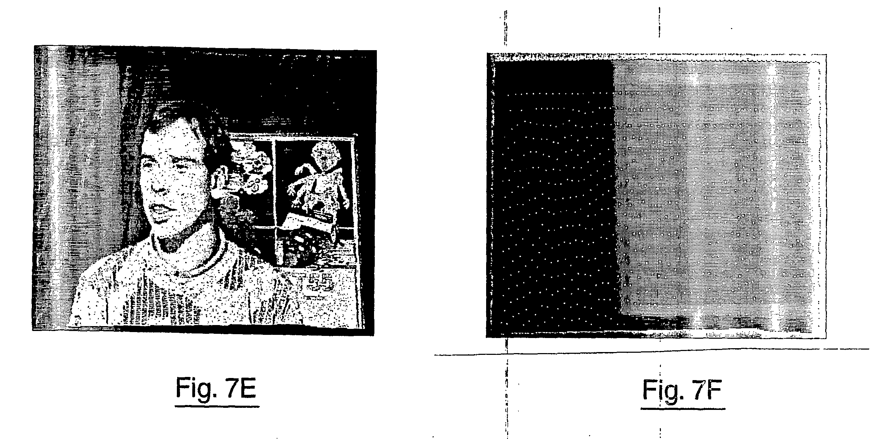

L'algorithme 1 présenté en Annexe 3 est l'algorithme de reconstruction de l'image k projetée sur l'image i (figure 7E). Pour reconstruire l'image Ir, on parcourt cette image, les positions des pixels étant donc entières, et on cherche le correspondant de chaque pixel de Ir dans l'image k en lui appliquant le mouvement inverse de i vers k.

Les vecteurs mouvement n'ayant pas des valeurs entières, le pixel correspondant n'a donc pas une position à valeurs entières. Une interpolation bilinéaire est alors nécessaire pour calculer sa valeur de luminance.

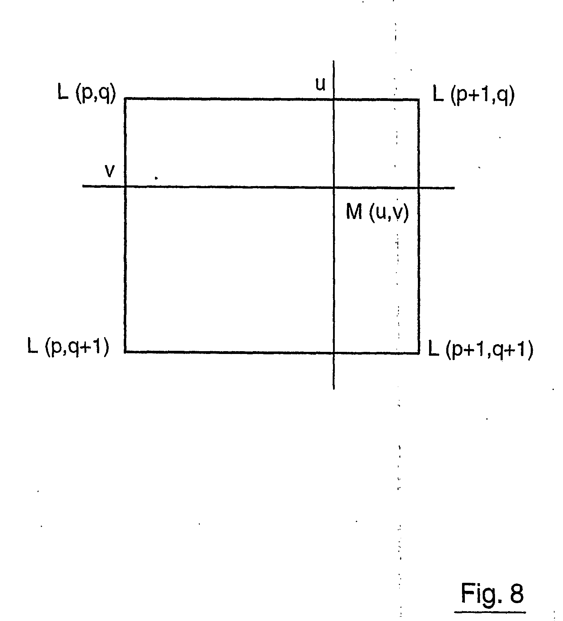

La figure 8 détaille l'interpolation bilinéaire effectuée entre les valeurs de luminance aux valeurs entières :

Interpolation bilinéaire de la luminance L en M :

$$a = (1-u)*L(p,q) + u*L(p+1,q)$$

$$b = (1-u)*L(p,q+1)+u*L(p+1,q+1)$$

$$L_{(u,v)} = (1-v)*a+v*b$$

La luminance ainsi calculée est affectée au pixel courant de l'image Ir à reconstruire. Les pixels reconstruits doivent d'abord être contenus dans le masque de définition de l'image i, puis les pixels déplacés doivent être prédictibles c'est-à-dire contenus dans le masque de définition de l'image k, le masque de prédiction (figure 7F) de l'image k prend alors la valeur « vraie » aux pixels répondant à ces deux critères.

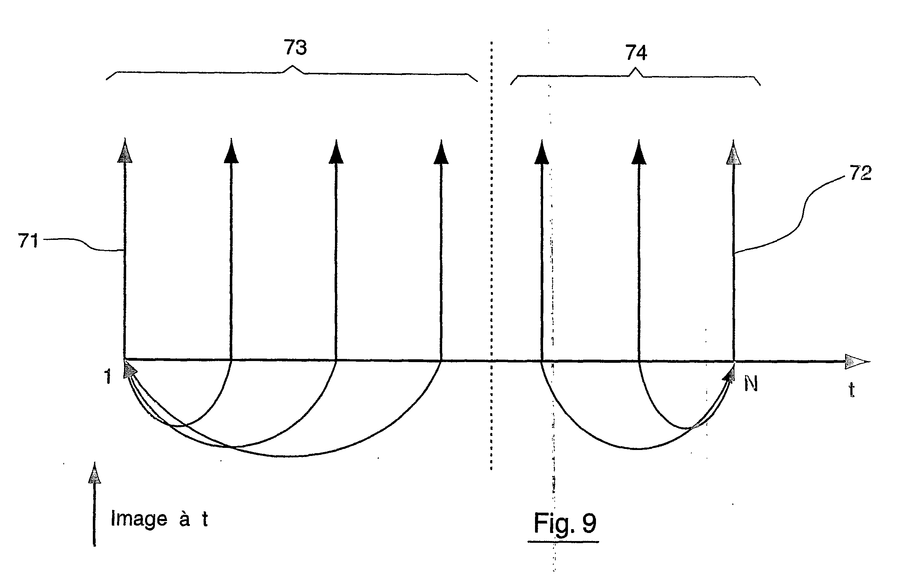

ii. Au niveau du choix des grilles de référence pour la projection des images et la récupération des textures, on utilise, comme illustré en figure 9, deux grilles d'échantillonnage de référence, celle de la première 71 et celle de la dernière image 72 du GOP. Pour un GOP de N images, les images 73 de 1 à (N+1)/2 sont plaquées sur la première image 71 du GOP, les images 74 de (N+1)/2+1 à N sont plaquées sur l'image N 72.

• Padding 3D de la texture

iii. Padding 2D

Le plaquage des images sur une autre grille de référence que la leur implique que des zones du support restent indéfinies après l'opération de plaquage. Ces zones sont repérées grâce au masque de prédiction de l'image plaquée. Ces zones non définies sont remplies par une opération de padding.

Le padding d'une image consiste à remplir les zones où l'image n'est pas définie par des valeurs proches de celles définies du voisinage.

Le padding est basé sur un principe d'analyse-synthèse.

L'image à compléter est analysée, puis synthétisée, et on calcule le résidu par rapport à la synthèse et on reprend l'analyse sur ce résidu.

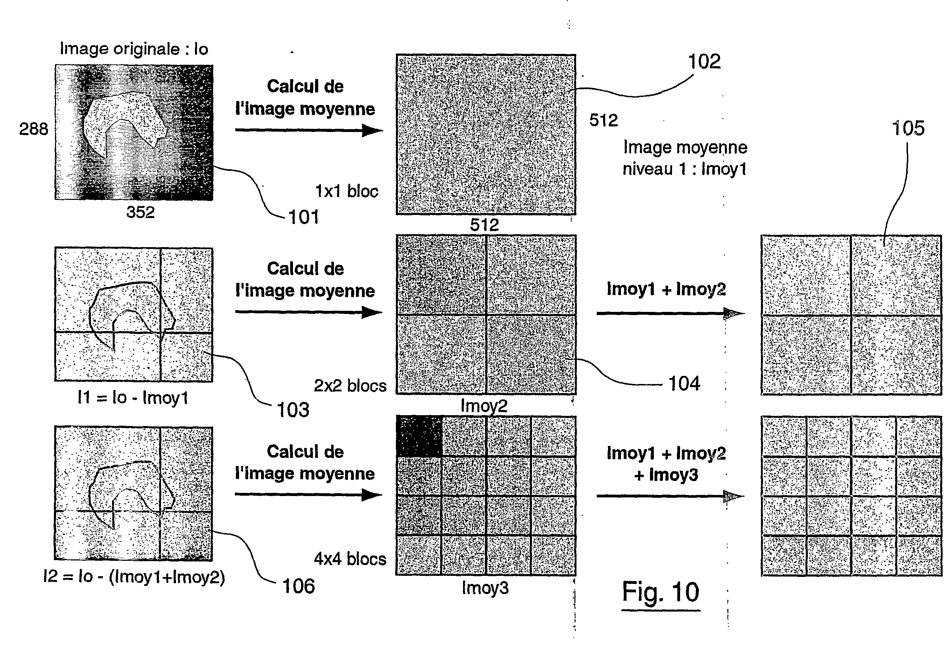

La figure 10 montre un tel principe. Des versions basse fréquence successives de l'image sont calculées avec les valeurs définies sur des blocs recouvrant l'image, puis les basses fréquences sont successivement expansées dans les zones non définies.

Par exemple pour une image Io 101 au format CIF de taille 352x288 pixels, une première basse fréquence est calculée sur un bloc de taille 512x512 recouvrant toute l'image. La moyenne est calculée sur les pixels de l'image qui sont définis dans le masque de prédiction, et les pixels non définis sont à 0 (en noir sur la figure).

Une image moyenne Imoy1 102 de la taille du bloc est remplie avec la valeur de la moyenne calculée.

Comme il n'y a qu'un bloc, il n'y a qu'une seule valeur de moyenne. Une image résidu I1 103 est alors calculée en soustrayant l'image originale à l'image moyenne (I1 = Io - Imoy1).

(*) Le bloc de taille 512x512 est divisé en 4, (les blocs sont de taille 256x256), et le processus reprend alors au calcul de la moyenne sur chaque bloc, mais la moyenne est maintenant calculée sur les pixels de l'image résidu Il qui sont définis dans le masque de prédiction de l'image originale. L'image moyenne Imoy2 104 obtenue est ajoutée (105) à l'image moyenne précédente. La dernière image obtenue 105 est soustrait à I1 pour obtenir I2 106.

Le processus reprend depuis (*) en considérant I2 à la place de I1. Ce processus s'itère jusqu'à ce que la taille des blocs soit égale à la taille du pixel.

Le remplissage des zones non définies par des versions basses fréquences entraîne un flou dans ces zones indéfinies par rapport aux zones définies.

Cependant la continuité dans l'image est préservée. Les zones non définies deviennent définies après l'opération de padding, le masque de prédiction de l'image originale prend alors la valeur « vraie » en tout pixel de l'image.

iv. Padding temporel

Le padding effectué par le codeur est un padding 3D. Il prend en compte des images 2D et la dimension temporelle. Un padding 2D est effectué sur la première (I1) et la dernière image (IN) du GOP, puis un padding temporel est effectué pour compléter les autres images du GOP.

Le padding temporel utilise le fait que les images internes du GOP sont prédites par une interpolation linéaire entre les deux images extrêmes. Comme on code ensuite les résidus de prédiction par ondelette 3D, on cherche à avoir des résidus le plus faible possible.

Le padding doit donc compléter les zones non définies avec des valeurs qui donneront des résidus très faibles, voire nuls en ces points, tout en gardant une continuité spatiale et temporelle.

Pour cette raison, les images internes du GOP sont complétées par une interpolation linéaire à partir des deux images extrêmes paddées spatialement. On parcourt donc chaque image du GOP entre 1 et N, et pour chaque pixel de l'image courante t. Si le pixel est non défini dans le masque, sa valeur est alors : a*I(1)+(1-a)*I(N), où a = t/N.

### *6.6 Codage du mouvement*

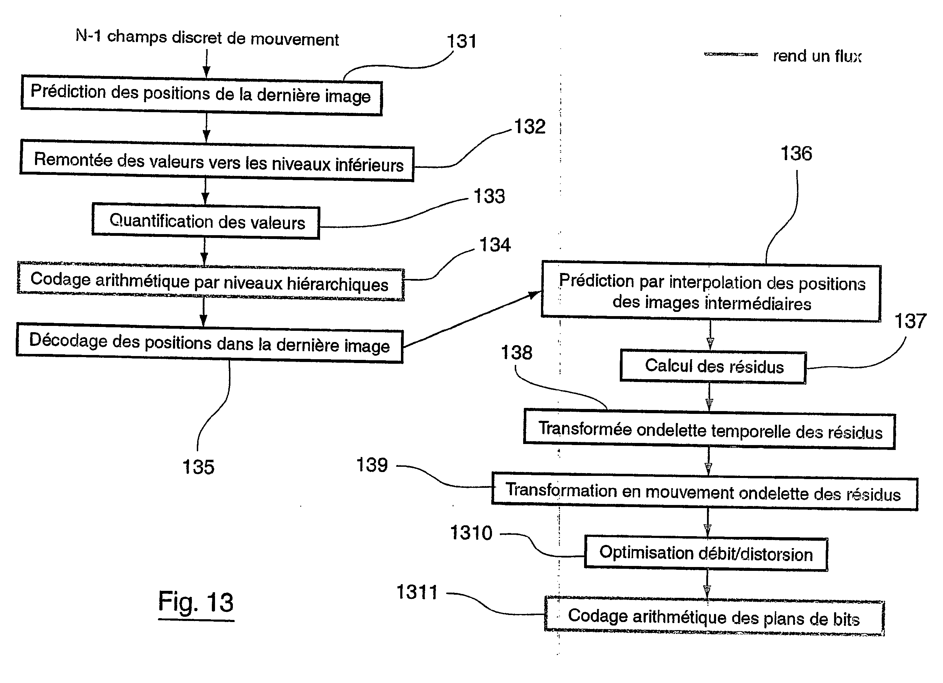

Le principe de ce codage est illustré par l'organigramme de la figure 13.

o Codage dans la couche basse

Dans la couche basse, les informations de mouvement codées sont les positions du maillage dans la dernière image du GOP.

    i. On effectue une prédiction (131) des positions du maillage dans la dernière image avec les positions du maillage dans la première image du GOP. On code alors l'erreur de prédiction, comme expliquée précédemment : (couche basse de type P).

    ii. Les informations de mouvement issues de l'estimation sont données pour le niveau de hiérarchie du maillage le plus fin. On effectue alors une remontée (132) des valeurs vers les niveaux plus grossiers. Pour le niveau le plus grossier, on a les positions des noeuds intervenants à ce niveau, et pour les niveaux suivants plus fins, les positions des nouveaux noeuds, noeuds milieux d'arcs.

    iii. Les valeurs sont ensuite quantifiées (133) avec un pas de quantification de 0.5.

    iv. Puis les valeurs quantifiées sont passées à un codeur arithmétique (134) qui définit une statistique différente pour chaque niveau de hiérarchie. Un codeur arithmétique code un ensemble de valeurs par un message constitué de plusieurs symboles. Les symboles ne sont pas codés séparément. Si on représente le message résultant à l'aide d'intervalles, chaque message possible est codé sur un intervalle Ii de probabilité pi. La statistique d'un codeur arithmétique est l'ensemble des probabilités de chaque intervalle. Dans le cas de l'invention, le codeur initialise les probabilités à 1/n, où n est le nombre de symboles à coder, au départ tous les messages sont équiprobables. Les probabilités sont mises à jour à chaque fois qu'une valeur de l'ensemble est à coder. Quand toutes les valeurs sont codées, il suffit de transmettre un nombre compris dans l'intervalle du message résultant.

Le codage arithmétique des positions du maillage utilise des statistiques différentes pour chaque niveau de hiérarchie, car les valeurs sur un niveau de hiérarchie donné ont plus de chances d'être proches les unes des autres, que des valeurs entre niveaux différents. La similitude des valeurs permet de réduire la taille du message à transmettre, donc un gain en coût de codage.

    v. Seuls les noeuds valides du maillage sont à code. Un noeud est valide s'il appartient à un triangle valide, et un triangle est valide s'il reconstruit au moins un pixel dans le masque de l'image. Les noeuds non valides ne reconstruisent aucun pixel de l'image, il est inutile de les coder.

• <u>Codage dans la couche haute</u>

i. Les informations de mouvement dans la couche haute sont les informations concernant les positions intermédiaires du maillage, entre la première et la dernière image du GOP. On décode donc les positions dans la dernière image (135), puis on prédit par interpolation (136) les positions des images intermédiaires. On code les résidus (137) d'interpolation entre les positions dans ces deux images et les positons intermédiaires. Si m(1) et m(N) sont respectivement les positions du maillage dans la première et la dernière image, les résidus que l'on code ensuite sont alors : res(t) = m(t) - m(1) - (1-t)/N*m(N). Les résidus que l'on code sont les résidus des noeuds valides.

ii. Les résidus sont transformés (138) par une ondelette temporelle « zeroside » avec un filtre d'Antonini (donné en annexe 1).

iii. Le mouvement résidu des images intermédiaires est ensuite transformé en mouvement ondelette (139). Le mouvement ondelette est la représentation du maillage par niveaux hiérarchiques, où pour chaque niveau, la position des noeuds donnée est la position optimale pour ce niveau de hiérarchie. Le niveau le plus grossier donne le mouvement global de la scène, les niveaux plus fins permettent des raffinements successifs des mouvements locaux. A chaque niveau de maillage, les informations à coder sont les nouveaux noeuds créés en milieux d'arcs et le raffinement des positions des noeuds déjà présents au niveau inférieur.

iv. Le fait d'avoir des positions de noeuds optimales à chaque niveau de hiérarchie permet d'effectuer une optimisation débit/distorsion sur chaque niveau.

Le processus d'optimisation débit/distorsion 1310 calcule d'abord pour chaque niveau de hiérarchie, les débits et distorsions associés à chaque pas de quantification. Pour un débit donné, on cherche la combinaison optimale des différents points de chaque niveau de hiérarchie, combinaison qui fournira le meilleur compromis entre débit et distorsion, chaque niveau est pondéré par un poids tenant compte de son influence sur la qualité du mouvement rendu.

Les niveaux grossiers auront un poids plus important que les niveaux fins, ce qui signifie que lors de la recherche de la meilleure combinaison, la distorsion associée à un pas de quantification sera plus forte pour un niveau grossier que pour un niveau fin. En effet, une erreur au niveau grossier est plus visible qu'à un niveau fin.

Le processus d'optimisation débit/distorsion fournit les pas de quantification associés à chaque débit à appliquer à chaque niveau de hiérarchie du mouvement pour avoir un codage optimal.

v. Les valeurs des niveaux de hiérarchie sont ensuite quantifiées pour un débit donné et passées à un codeur arithmétique (1311).

o <u>Codage avec pertes</u>

Une des innovations de l'invention par rapport aux schémas existants est que le mouvement est codé avec pertes. Le mouvement codé avec pertes permet de reconstruire une vidéo de même aspect que la vidéo originale mais décalée au niveau pixel.

En, effet, la vidéo reconstruite est en fait synthétisée avec les informations de mouvements et de texture décodés. Le codage du mouvement avec pertes tient compte du fait que l'oeil humain est moins sensible aux défauts de mouvements d'une vidéo qu'aux défauts de textures. Ainsi, le débit gagné sur le mouvement est répercuté sur le codage de la texture et permet d'améliorer celle-ci.

### *6.7 Codage de la texture*

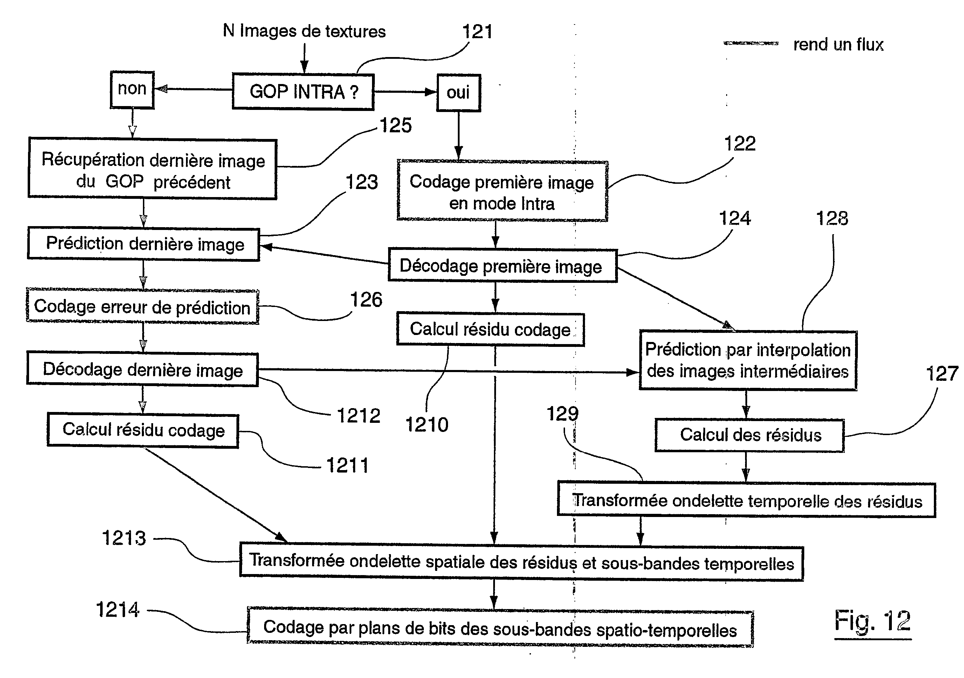

Le principe de ce codage est illustré par l'algorithme de la figure 12.

• <u>Codage dans la couche basse</u>

i. Si le GOP à coder est un GOP intra (test 121), on code (122) la première image du GOP en intra avec un codeur JPEG-2000.

ii. On prédit (123) la dernière image du GOP avec la première image. Si le GOP est un GOP intra, l'image servant à la prédiction est la première image du GOP décodée (124) ; sinon c'est la dernière image du GOP précédent codée-décodée (125). L'erreur de prédiction est alors codée (126) par un codeur JPEG-2000.

• Codage dans la couche haute

i. Les images extrêmes codées en couche haute sont un raffinement de codage par rapport à la couche basse. Si le GOP est un GOP intra, la première image dans la couche haute est un raffinement de codage sur cette image. Si le GOP est un GOP inter, on n'a pas de raffinement pour cette image. Le raffinement sur la dernière image est toujours présent.

ii. Comme pour le mouvement, des résidus d'interpolation sont calculés (127) sur les images intermédiaires, à partir des image interpolées (128). Soient I(1) et I(N) les images extrêmes du GOP, res(t) = I(t) - I(1) - (1-t)/N*I(N).

iii. Les résidus sont ensuite transformés par une transformée ondelette temporelle (129). La transformée ondelette est utilisée sous sa forme lifting et le filtre utilisé est le 5/3 (donné en annexe 1).

La transformée est appliquée sur les résidus des images intermédiaires le long de la trajectoire du mouvement.

Des compensations en mouvement sont alors nécessaires au moment du calcul de coefficients n'utilisant pas la même image de référence.

iv. La transformée est une transformée « zeroside ». Avec l'interpolation effectuée, le signal à transformer est nul aux extrémités. En effet les valeurs de la première image du GOP et de la dernière image sont nulles par l'interpolation utilisée : $I(t)_{interp}$= (1-a)*I(1) + a*I(N), pour I(1) et I(N), a vaut respectivement 0 et 1, ce qui donne alors 0 pour le résidu en 1 et N.

La figure 11 donne l'allure du signal résidu considéré I(t)-I(t) interp. La forme du signal montre la validité de la prédiction du signal texture (et mouvement) par l'interpolation linéaire.

La prédiction est exacte aux extrémités et de moins en moins sûre au fur et à mesure que l'on s'approche du centre du GOP.

Lors de la transformée temporelle, le signal transformé est le résidu d'interpolation défini entre 2 et N-1.

Au moment du calcul de coefficients situés aux bords du signal, une symétrie est appliquée au signal pour pouvoir simuler un signal à support de longueur infinie. Cependant, comme on connaît la valeur du signal en 1 et N (en ces points le signal est nul), on considère que la transformée est en fait appliquée de 1 à N. De ce fait, on n'applique plus une symétrie aux bords mais une antisymétrie.

v. Les sous-bandes résultant de la transformée ondelette 129 et les raffinements de codage des images extrêmes (obtenu par calcul des résidus 1210 et 1211, respectivement sur la première image décodée (124) et la dernière image décodée (1212)) sont ensuite codés par un codeur 1214 progressif scalable, de type JPEG-2000.

Les niveaux de décompositions en ondelette utilisé dans la décomposition en ondelettes spatiales 1213 sont différents suivant la nature de la composante à coder. Les résidus de codage sont des hautes fréquences qu'il est préférable de transformer avec peu de niveaux de décomposition d'ondelette, on utilise un seul niveau de décomposition et des blocs de taille 16x16. Pour les sous-bandes temporelles, on tient compte de la fréquence de la sous-bande : pour la basse fréquence, on utilise cinq niveaux de décomposition, pour les très hautes fréquences trois niveaux et pour les hautes fréquences intermédiaires quatre niveaux de décompositions. La taille des blocs est 64x64 quelle que soit la sous-bande.

## 6.8 Train binaire

Le train binaire est composé des quatre flux résultant des quatre codages : flux de texture bas niveau, flux de mouvement bas niveau, flux de texture de réhaussement, flux de mouvement de rehaussement. L'agencement du train binaire est un agencement multi-champs qui dépend de l'application nécessitant le train binaire.

L'application dispose de trois champs : mouvement, texture et forme. Chaque champ peut être coupé n'importe où, une qualité de base étant assurée pour chaque champ par les informations de la couche basse de chaque champ. L'application peut alors choisir la qualité désirée pour chaque champ (mouvement, texture et forme), les champs résultants sont alors multiplexés pour former un train binaire à transmettre à l'utilisateur.

## 6.9 Processus de décodage

Le processus de décodage récupère les informations de mouvement et de texture du flux binaire. Le mouvement est d'abord décodé puis la texture.

o Décodage du mouvement:

Un maillage hiérarchique régulier est généré par le décodeur sur la première image, de la même manière que le codeur l'avait fait, ainsi les maillages initiaux du codeur et décodeur sont identiques. Les positions du mouvement dans la dernière image sont alors décodées, à ces positions sont ajoutées les positions du maillage de la première image.

Les positons des images intermédiaires sont interpolées, comme au codage, par les positions dans la dernière image et dans la première image. Puis, l'information de mouvement de la couche haute est décodée au débit indiqué en paramètre.

Les informations décodées correspondent aux sous-bandes spatio-temporelles de mouvement. La transformation inverse en mouvement ondelette est appliquée sur les sous-bandes, puis l'ondelette temporelle inverse (filtre de synthèse d'Antonini donné en annexe 1) est appliquée. Les résidus obtenus sont ajoutés aux valeurs précédemment interpolées.

• Décodage de la texture :

Le décodage de la texture est similaire au décodage du mouvement. Il est cependant nécessaire d'identifier si le GOP courant est un GOP intra. Si c'est le cas, la première information de texture de la couche basse à décoder est la texture de la première image du GOP. Une fois celle-ci décodée, le résidu de la dernière image est décodé et ajouté à la prédiction de la dernière image (prédiction effectuée de la même façon qu'au codage par la première image).

Les images intermédiaires sont ensuite interpolées comme on l'a fait au codage. Si le GOP est un GOP inter, la prédiction de la dernière image du GOP est faite par la dernière image décodée du GOP précédent. Les informations de texture de la couche haute sont ensuite décodées. Les résidus de codage des première et dernière images du GOP sont respectivement ajoutés à celles-ci.

Les sous-bandes temporelles des images intermédiaires sont transformées par l'ondelette lifting 5/3, les filtres utilisés en lifting dans la transformée directe et la transformée inverse sont les mêmes, seuls les signes des deux étapes sont inversés, selon le principe du lifting expliqué en annexe 2.

Les résidus obtenus sont ajoutés aux images intermédiaires précédemment interpolées.

• Synthèse de la séquence vidéo :

La synthèse de la séquence vidéo projette les images de texture sur leur grille d'échantillonnage originale, c'est la phase qui couple le mouvement et la texture pour obtenir au final une séquence vidéo synthétisée la plus proche possible de la séquence vidéo originale.

• Mesure de qualité de la séquence vidéo reconstruite :

Le calcul du PSNR entre la vidéo reconstruite et la vidéo originale ne donne pas un critère fiable permettant de juger de la qualité visuelle restituée par la vidéo reconstruite. En effet, le codage du mouvement avec pertes implique que la séquence vidéo est synthétisée de manière décalée par rapport à la séquence originale, le PSNR calculé alors biaisé par ce décalage.

Le critère utilisé alors pour la mesure de qualité de la séquence synthétisée est un PSNR calculé dans le domaine des images de texture. L'hypothèse faite est que l'oeil humain n'est pas sensible aux défauts de mouvement d'une séquence, dans la mesure où les défauts restent inférieures à un certain seuil.

De ce fait, le PSNR texture, qui calcule la distorsion entre les images de texture originales et les images de texture décodées, rend une mesure de qualité restituée de la séquence synthétisée.

### *6.9 Gestion des retournements généré par l'estimation de mouvement basé maillage*

o Principe

Les maillages déformables définissent une représentation continue d'un champ de mouvement alors que le mouvement réel d'une séquence vidéo est de nature discontinue. Ainsi, lorsque différents plans et objets se recouvrent dans une scène, des zones d'occultation et de découvrement apparaissent, générant des lignes de discontinuités.

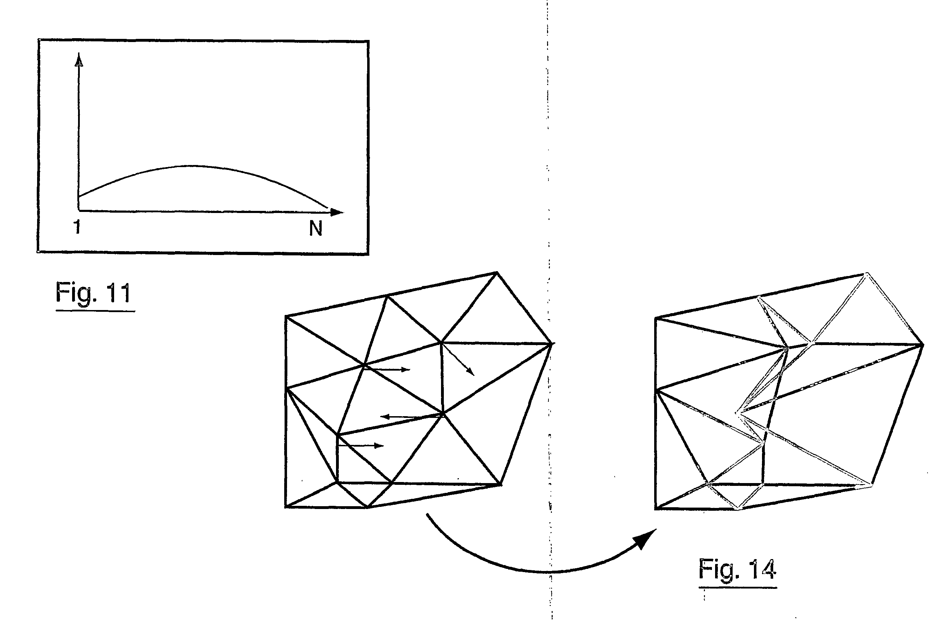

Modéliser de tels artefacts par un maillage global, par opposition aux maillages segmentés selon les objets vidéo constitutifs de la scène, constitue une difficulté non résoluble sans modification du modèle de représentation. L'enjeu consiste donc à éliminer cette dégradation visuelle mais aussi la limite en terme d'analyse, en déterminant les zones en défaut. Classiquement, ce type de perturbation du champ réel de mouvement entraîne dans sa représentation maillée des retournements comme peut le montrer la Figure 14.

Habituellement, afin de résoudre ce problème, deux types de techniques sont utilisés : le post-traitement et la mise en place de contraintes de non-retournement.

Le post-traitement peut être réalisé suivant deux types de scénarios : le premier (correction a posteriori) consiste à appliquer tel quel les vecteurs de mouvement, à détecter ceux en défaut puis à corriger leur valeur ; le second procède itérativement, ajoutant une partie du déplacement escompté aux noeuds à chaque itération tel qu'il n'y a pas de retournement, et bouclant jusqu'à convergence du processus.

Les méthodes de post-traitement agissant une fois l'estimation réalisée, le résultat est sous-optimal car les vecteurs de mouvement sont corrigés indépendamment de leur contribution à la minimisation de l'erreur de prédiction. Une amélioration consiste donc à optimiser le champ en prenant compte au cours du processus d'optimisation les contraintes de non-retournement.

Pour cela, on doit adapter l'estimation de mouvement en ajoutant à l'erreur quadratique de prédiction un lagrangien augmenté permettant de corriger la déformation des triangles lorsque ceux-ci s'approchent du triangle d'aire nulle. Cette dernière technique permet effectivement de déterminer la solution optimale du problème, si ce dernier représentait un champ continu. Or, la nature d'une séquence vidéo étant discontinue, on peut utiliser une autre technique consistant à déterminer les zones de discontinuités afin de les restaurer en générant l'apparition ou disparition d'objets.

o Approche utilisée dans le mode de réalisation décrit

Cette technique, dans le document de brevet FR-99 15568, permet de résoudre le problème de retournement généré par l'estimateur de mouvement basé maillage.

Elle consiste à laisser l'estimateur de mouvement créer les retournements entre deux instants successifs t1 et t2 ; ainsi en repérant les zones de retournements, les zones de discontinuités sont détectées. Le processus consiste alors à réaliser une nouvelle estimation de mouvement entre t1 et t2 en excluant les zones en défaut (zones contenant au moins un retournement) afin de minimiser l'erreur de prédiction entre les deux images considérées.

Cette réoptimisation permet de déterminer les vecteurs de mouvement optimaux pour la zone continue (i.e. admettant une bijection entre t1 et t2) et d'éviter ainsi la perturbation des valeurs des vecteurs mouvements obtenus dans l'optimisation précédente générée par les zones de discontinuités.

Dans cette approche, Les zones en défaut peuvent alors être traitées de 3 manières différentes.

• Propagation artificielle

La première idée consiste à propager de façon artificielle les vecteurs de mouvement des sommets du maillage ayant exclu les zones en défaut, appelés sommets INSIDE, vers les sommets des zones en défaut pour lesquels nous avons optimisé la compacité des triangles concernés. Cette propagation repose sur un double balayage itératif avant-arrière, appliqué aux sommets du plus bas niveau de la pyramide où les vecteurs de mouvement ont été optimisés (niveau noté $L_m$). Cette approche s'inspire des calculs de carte de distance de chanfrein (« Les distances de chanfrein en analyse d'images : fondements et applications ». Edouard THIEL. Thèse de l'Université Joseph Fourier de Grenoble soutenue le 21 Septembre 1994). Elle suit l'algorithme suivant :

Algorithme :

   o *Pour tous les sommets S de $L_m$*
   *si INSIDE(S) alors S devient PROPAGATED sinon S devient non-PROPAGATED*
   o *Itérer tant qu'il reste des vecteurs mouvement indéfinis*

      o *Pour tous les sommets S de $L_m$ parcourus de haut-gauche vers bas-droite*
      *si non-PROPAGATED(S) et S possède au moins 2 voisins PROPAGATED*
      *alors MOUVEMENT(S) = moyenne des MOUVEMENTs des voisins PROPAGATED*
      *S devient PROPAGATED*

   • *Pour tous les sommets S de $L_m$ parcourus de bas-doite vers haut-gauche*
   *si non-PROPAGATED(S) et S possède au moins 2 voisins PROPAGATED*
   *alors MOUVEMENT(S) = moyenne des MOUVEMENTs des voisins PROPAGATED*
   *S devient PROPAGATED*
   • *Pour tous les sommets P de la pyramide parcourue de $L_{m-1}$ à $L_0$*
   *MOUVEMENT(P) = MOUVEMENT(F) tq P est père de F*

On peut également utiliser deux autres techniques : la fusion de sommets et les maillages n-manifold.

• Fusion de sommets

La première consiste à détecter au niveau du décodeur les zones d'occultation déterminées par les triangles ayant des sommets aux vecteurs de mouvements antagonistes (critère CA). Effectivement, les triangles ainsi détectés sont susceptibles de se retourner puisque leurs sommets sont positionnés sur des objets différents (un des deux objets occultant son voisin).

Dans ce cas, on propose de pratiquer une fusion d'arêtes (« edge collapse ») entre deux sommets voisins ayant un mouvement antagoniste. Il en résulte la disparition d'un triangle, traduisant la disparition d'une partie d'un objet.

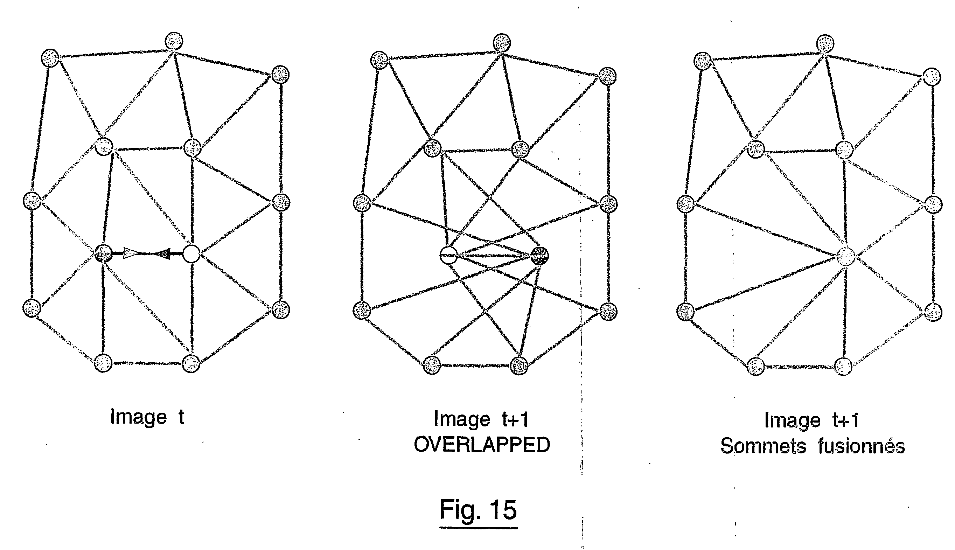

Ce principe, est illustré par la figure 15.

o Maillage "n-manifold"

Un deuxième procédé consiste à travailler sur des maillages n-manifold (une arête peut être partagée par n, n>=2, triangles au lieu de 1 ou 2 habituellement). Pour ce faire, on réalise les estimations de mouvements. Lorsqu'une zone d'occultation est détectée (retournement de triangles), les triangles alors associés à cette zone sont marqués d'un flag OVERLAPPED (nouveau *flag*).

On refait alors l'optimisation de mouvement en excluant les triangles OVERLAPPED. Cette seconde optimisation peut conduire au retournement de nouveaux triangles : ceux-ci sont également marqués OVERLAPPED et l'optimisation est de nouveau calculée. La zone OVERLAPPED marque ainsi les découvrements ou recouvrements.

Les zones marquées OVERLAPPED, correspondent donc à des objets ayant été occultés. L'idée retenue consiste à temporairement évincer ces triangles, tout en les conservant en mémoire afin de gérer économiquement leur réapparition future.

Selon la topologie d'un sous-maillage OVERLAPPED, deux cas se présentent :

• Les frontières du sous-maillage sont rescindées. Le maillage devient n-manifold (avec n = 3) ;;
• Une seule partie des frontières du sous-maillage est rescindée et dans ce cas une correction locale intra doit être réalisée sur les autres mailles OVERLAPPED.

Le fait d'utiliser un maillage n-manifold permet de conserver les informations photométriques relatives à des zones pouvant disparaître mais également apparaître à diverses reprises durant la séquence.

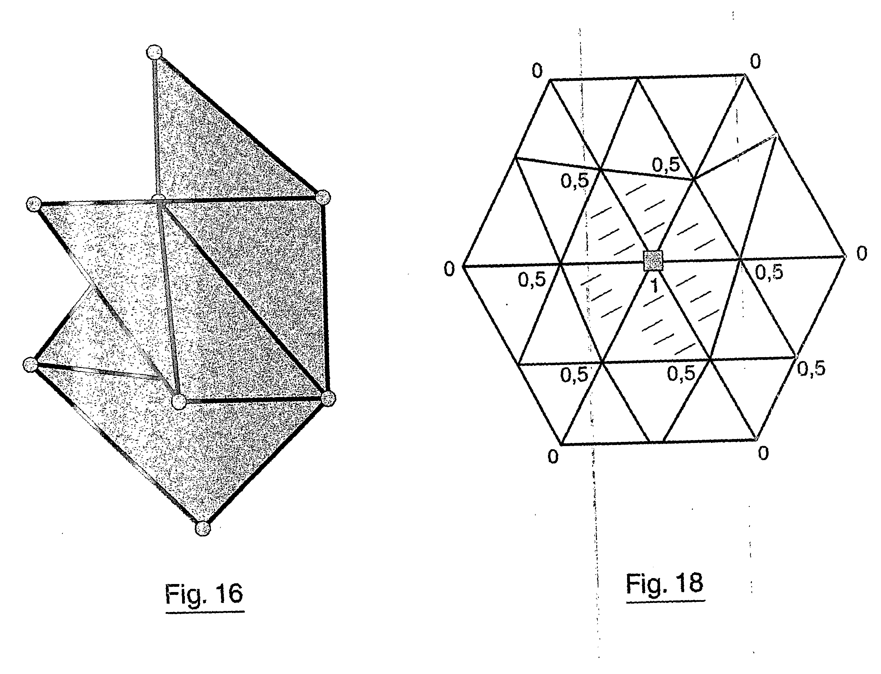

Un exemple d'un tel maillage "n-manifold" est illustré par la figure 16.

### 6.10 Exemple de mise en oeuvre pour la gestion des retournements des maillages :

- *Détection et déconnexion des triangles dégénérés ou retournés* :

Afin de limiter les retournements de mailles, les triangles susceptibles de provoquer des retournements sont détectés à la fin de l'estimation 1 vers t. Ces triangles ont une forme dégénérée et provoque des perturbations dans l'estimation de mouvement, ils indiquent les zones de découvrements et recouvrements.

A leur détection, ces mailles sont déconnectées du reste du maillage et l'estimation est relancée sans prendre en compte ces zones. De la même façon, les triangles retournés sont détectés et déconnectés du maillage. La détection des triangles retournés se fait en regardant si le triangle est défini dans le sens positif ou négatif. Initialement tous les triangles sont orientés dans le sens positif (direct), si lors du calcul du produit vectoriel du triangle le signe est négatif, alors le triangle est retourné. La détection des triangles dégénérés se fait par l'étude de la déformation du triangle entre l'image 1 et l'image t.

La déformation d'un triangle peut être étudiée en considérant les paramètres de mouvement du triangle de 1 vers t. Si (x,y) est la position d'un point en 1 et (x',y') la position du point en t, les paramètres du mouvement affine sont tels :

$$x' = ax + by + c$$

$$y' = dx + ey + f$$

Soit sous forme matricielle : $\begin{bmatrix} x' \\ y' \end{bmatrix} = A \begin{bmatrix} x \\ y \end{bmatrix} + B$ , B traduisant les paramètres de translation, et A les paramètres de zoom et de rotation. La translation ne déformant pas le triangle, nous ne nous intéresserons qu'à la matrice A. Soit D la matrice diagonale de A, $D = \begin{bmatrix} \lambda_1 & 0 \\ 0 & \lambda_2 \end{bmatrix}$, avec $\lambda_1 et \lambda_2$ les valeurs propres de A.

Un test est d'abord effectué sur le rapport des valeurs propres pour savoir si la déformation est un zoom global, le rapport des valeurs propres peut être calculé via la trace de A_ et le déterminant de A.

Dans le cas d'un zoom global (changement de résolution de même grandeur en x et y), le triangle n'est pas considéré comme déformé, car sa structure est la même en t et en 1 à un facteur d'échelle près.

Dans le cas où le rapport des valeurs propres est différent de 1, la déformation n'est pas la même dans les deux sens. On étudie alors les valeurs propres de A. La résolution du trinôme x_-traceA_*x+(detA)_, x une des valeurs propres de A, nous donne les deux valeurs propres de A. Selon la valeur des valeurs propres, le triangle est considéré dégénéré ou non. S'il est dégénéré, on le déconnecte du maillage.

### 6.11 Estimation de mouvement basée sur l'approche multigrille

Afin d'améliorer la convergence de l'algorithme breveté en Sept 98 (98 11 227) concernant un procédé d'estimation de mouvement entre deux images basé sur un maillage hiérarchique emboîté, nous avons développé une nouvelle technique issu du monde des mathématiques appliquées, appelé multigrille.

Pour ce faire, nous allons décrire l'approche multigrille associée aux éléments finis.

On cherche :

$$u \in V_N, \quad a(u,v) = L(v), \quad \forall v \in V_N \quad (I)$$

où $V_N$ représente un espace vectoriel de dimension N , a(u,v) une forme bilinéaire sur $V_N \times V_N$ et L (v) une forme linéaire sur $V_N$.

A partir de chaque sous espace $V_M \subset V_N$ de dimension $M < N,$ on peut construire une méthode de résolution à deux niveaux de la façon suivante :

Etant donnée $\tilde{u} \in V_N$ approximation de la solution exacte u, la correction $c = u - \tilde{u}$ vérifie donc :

$$c \in V_N, \quad a(c,v) = L(v) - a(\tilde{u},v), \quad \forall v \in V_N, \quad (II)$$

On définit une approximation $c_M$ de c par :

$$c_M \in V_M \quad \text{vérifiant } a(c_M, w) = L(w) - a(\tilde{u}, w), \quad \forall w \in V_M \quad (III)$$

Examinons la représentation matricielle de ces différents problèmes. Appelons $\varphi_i, 1 \le i \le N$ les fonctions de base de $V_N$ et $\Phi_j, 1 \le j \le M$ celles de $V_M$

Puisque $\Phi_j \in V_M \subset V_N$, il existe donc des coefficients $r_{ji}$ tels que :

$$\Phi_j = \sum_i r_{ji}\varphi_i$$

Appelons R la matrice de $L(\mathfrak{R}^N, \mathfrak{R}R^M)$ dont les coefficients sont les $r_{ji}$. Une fonction $y \in V_M \subset V_N$ qui s'écrit $y = \sum_j y_j \Phi_j$ s'écrit donc encore :

$$\sum_{j,i} y_j r_{ji}\varphi_i = \sum_i x_i\varphi_i$$

ce qui définit l'opérateur de prolongement par :

$$x_i = \sum_j y_j r_{ji} \text{ soit } x = R^t y$$

La solution u de (I) s'écrit $\sum_i u_i \varphi_i$

Appelons encore $u \in \mathfrak{R}^N$, le vecteur de composantes $u_i$. Si on définit la matrice A $\in L(\mathfrak{R}^N)$ et le vecteur $b \in \mathfrak{R}^N$ par :

$$a_{ij} = a(\varphi_j, \varphi_i) \text{ et } b_i = L(\varphi_i)$$

On sait que u est solution de :

$$Au = b$$

et c , solution de (II) vérifie :

$$Ac = b - A\tilde{u}$$

On vérifie que $c_M$ solution de (III) satisfait :

$$(RAR^t)c_M = R(b - A\tilde{u})$$

Cette façon systématique de définir des approximations dans $V_M$ pour des problèmes posés dans $V_N$ permet de construire des fonctions, toutes définies sur le même domaine à savoir celui correspondant au maillage fin même si elles sont caractérisées par des paramètres attachés aux noeuds du maillage grossier.

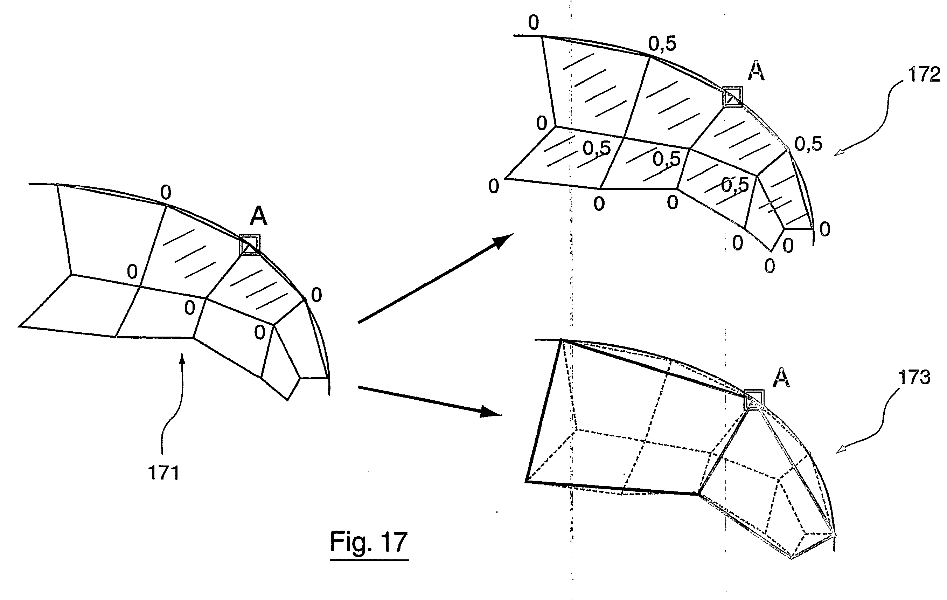

La figure 17 illustre cette approche sur un exemple, associant à un maillage fin 171 un maillage grossier correct 172 et un maillage grossier incorrect 173.

Afin de faciliter la compréhension de l'algorithme, nous allons résoudre le système $Hd = F$ sur 2 grilles.

On écrit le système linéaire $Hd = F$ sur la grille fine.

Soit P l'opérateur de prolongement de la grille grossière sur la grille fine alors la méthode à 2 grilles se formule de la façon suivante :

Ayant obtenu après quelques itérations de Gauss Seidel (par exemple) une approximation $\tilde{d}$, on calcule le résidu $F - H\tilde{d}$. On cherche la correction v à ajouter à $\tilde{d}$ sous la forme $v = Pw$, où w est solution de :

$$QHPw = Q(F - H\tilde{d})$$

L'opérateur sur la grille grossière est donc représenté par la matrice QHP.

Remarquons que $Q = P^t$ est un opérateur de restriction possible qui dans le cas où H est une matrice symétrique définie positive, possède l'avantage de conduire à la matrice $P^t HP$ qui est une matrice symétrique définie positive $P^t HP$ est la restriction de la matrice H au sous espace vectoriel ImP).

Cherchons à déterminer un opérateur de prolongement P, $Q = P^t$.

Si P est l'opérateur de prolongement bilinéaire sur un maillage régulier défini par les formules :

$$(IV) \Leftrightarrow \quad V_h(j,k) = \begin{cases} V_H(j,k) & si \ (j,k) \in M_{grossier} = M_G \\ 0.5[V_H(j_1,k_1) + V_H(j_2,k_2)] & avec \ (j_1,k_1),(j_2,k_2) \in M_G \times M_G \end{cases}$$

(avec h le pas de discrétisation du maillage fin et H celui du maillage grossier) alors *Pt* est un multiple de l'opérateur « moyenne pondérée » avec :

$$P^t V_H(j,k) = V_h(j,k) + 0.5\big[Vh(j_1,k_1) + L + Vh(j_v,k_v)\big]$$

où v représente la valence de (*j*, *k*)

En prenant un opérateur d'injection classique, on perd :

$$Q = P^t$$

- Calcul des matrices réduites *P<sup>t</sup> HP* sur les grilles grossières

H résulte de la discrétisation d'un problème variationnel et fait intervenir en chaque point (v+1) valeurs de la fonction inconnue à savoir la valeur au point en question et celles aux v plus proches voisins.

Nous appellerons V(o) le voisinage du point O et des ses v plus proches voisins.

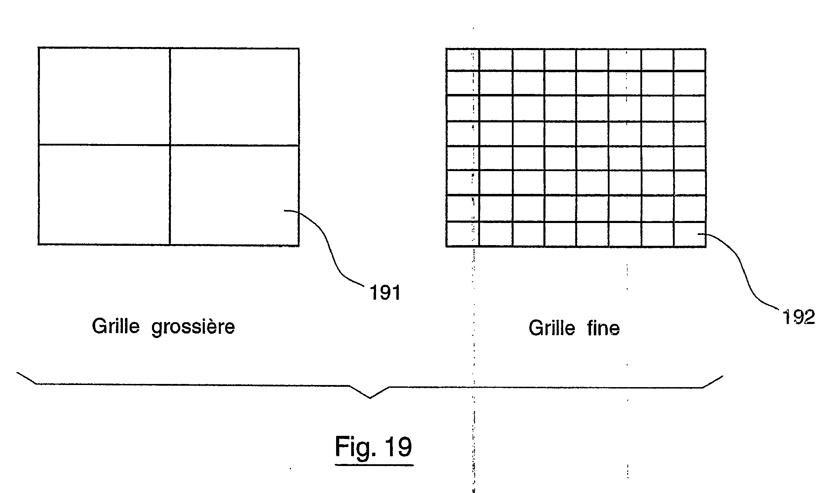

Prenons pour opérateur de prolongement P de la grille grossière sur la grille fine (IV), tel qu'illustré en figure 18.

Soit i, l'indice d'un point $G_i$ de la grille grossière et k l'indice d'un point $F_k$ de la grille fine alors les coefficients de la matrice P prendront les valeurs suivantes :

$$\begin{cases} 1 & \text{si } G_i \text{ et } F_k \text{ sont confondus} \\ 0.5 & \text{si } G_i \text{ et } F_k \text{ sont voisins sur la grille fine} \\ 0 & \text{sinon} \end{cases}$$

La formule générale du produit des matrices permet d'écrire pour $B = P^t HP$ :

$$B_{ij} = \sum_{kl} \left(P^t\right)_{ij} H_{kl} P_{lj} = \sum_{k,l} P_{ki} H_{kl} P_{lj}$$

Pour que $B_{ij}$ soit non nul, il faut qu'il existe au moins un indice $k \in V(i)$ et un indice $l \in V(j)$ tels que $H_{kl} \neq 0$, i.e. que k et 1 soient voisins, tous les voisinages étant pris sur la grille fine.

Il est facile de voir que $B_{ij}$ ne peut être non nul que si les points d'indices i et j sont voisins sur la grille grossière.

• Principe algorithmique simplifié (sur 2 grilles)

Au cours d'un cycle, on effectue les étapes suivantes, en utilisant les grilles grossière 191 et fine 192 illustrées en figure 19.

    i. Effectuer quelques itérations de Gauss Seidel (par exemple) sur la grille fine 192 de pas h (en général 2 ou 3) ;
    ii. Calculer le résidu sur la grille fine 192 ;
    iii. Restreindre ce résidu sur la grille grossière 191 de pas H=2h , restriction se faisant par moyenne pondérée ;
    iv. Résoudre le système sur la grille grossière pour obtenir une approximation de la correction ;
    v. Interpoler cette correction sur la grille fine 192 pour corriger la solution approchée obtenue sur la grille fine 192.

Si à la fin de cette étape, le résidu sur la grille fine est trop grand, on recommence un autre cycle, en reprenant les opérations au début de la 1<sup>ère</sup> étape. Pour résoudre le système d'équations sur la grille grossière, on peut de nouveau utiliser une méthode à deux grilles. Nous utilisons dans ce cas une méthode multigrilles.

• Le principe du multigrille géométrique :

Le multigrille géométrique utlilise l'approche décrite ci-dessus, mais s'attache à pondérer les noeuds entre niveaux successifs par des poids tenant compte de la déformation géométrique du maillage. En effet, les poids utilisés précédemment permettent de reconstruire un maillage fin à partir du maillage régulier de niveau inférieur.

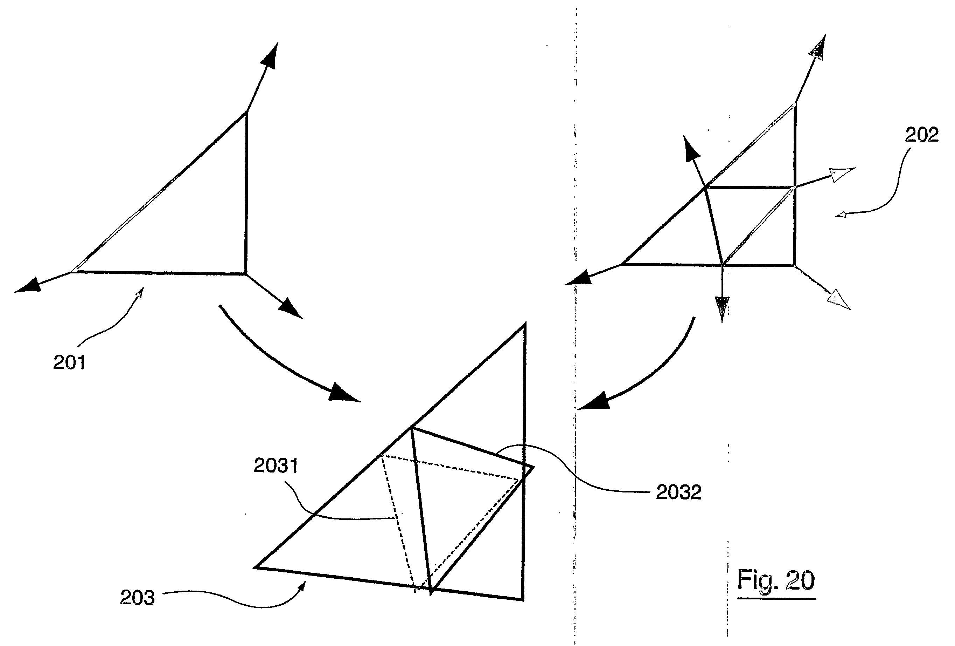

Cependant, quand le maillage est déformé, ces poids ne permettent pas de conserver la structure des maillages inférieurs. Pour conserver la structure des maillages inférieurs, on propose de modifier la pondération utilisée sur les noeuds lors de la répercussion du déplacement d'un niveau à l'autre, comme illustré en figure 20, sur laquelle on a représenté :

- 201 : déformations des noeuds du maillage grossier ;
- 202 : déformations des noeuds du maillage fin ;
- 203 déformation du maillage fin :

  o 2031 : déformation normale, (en pointillés) ;
  o 2032 : déformation multigrille (en gras).

Entre deux niveaux de hiérarchie successifs, les noeuds du maillage fin peuvent être représentés par leur coordonnées barycentriques par rapport au triangle de niveau grossier auxquels ils appartiennent. On distingue alors deux types de noeuds au niveau du maillage fin : les noeuds fils directs de noeuds du niveau supérieur et les noeuds milieux d'arêtes du niveau supérieur.

Les noeuds fils directs prennent directement la valeur de leur père. Pour l'autre type de noeuds, quatre noeuds peuvent potentiellement intervenir dans la combinaison linéaire de la valeur du noeud : les quatre noeuds des deux triangles contenant l'arête du niveau supérieur. Si le noeud est sur l'arête alors seuls les deux noeuds aux extrémités de l'arête interviennent, les poids barycentriques des deux autres noeuds des deux triangles contenant l'arête sont nuls. Si le noeud n'est pas sur l'arête, les noeuds qui interviennent sont les trois noeuds du triangle du niveau supérieur auquel appartient le noeud du niveau fin.

La matrice de passage entre deux niveaux successifs est alors très creuse. Il est alors possible de définir la matrice de passage entre deux niveaux non consécutifs par : $H^l_{l-k} = H^l_{l-1} H^{l-1}_{l-2} ... H^{l-k+1}_{l-k}$, où $H^l_{l-1}$ est la matrice de passage entre deux niveaux consécutifs.

o Compléments :

Une explication plus détaillée, et des propositions d'amélioration de cette technique multigrille sont présentées en Annexe 4.

### *6.12 Suivi de maillages - réalisation de mosaïques dynamiques d'objets vidéo*

• Suivi de maillages

La technique d'estimation du mouvement présenté dans la section précédente permet d'estimer le mouvement entre deux images successives. Le suivi du maillage au cours du temps consiste alors à estimer le mouvement entre l'image t où l'on dispose de la position du maillage suivi, et l'image t+1. L'utilisation d'une technique d'estimation multigrille est alors primordiale dans cette phase, puisque le maillage sur l'image t est un maillage déformé, et que l'estimation classique hiérarchique à base de maillages réguliers peut très rapidement décrocher.

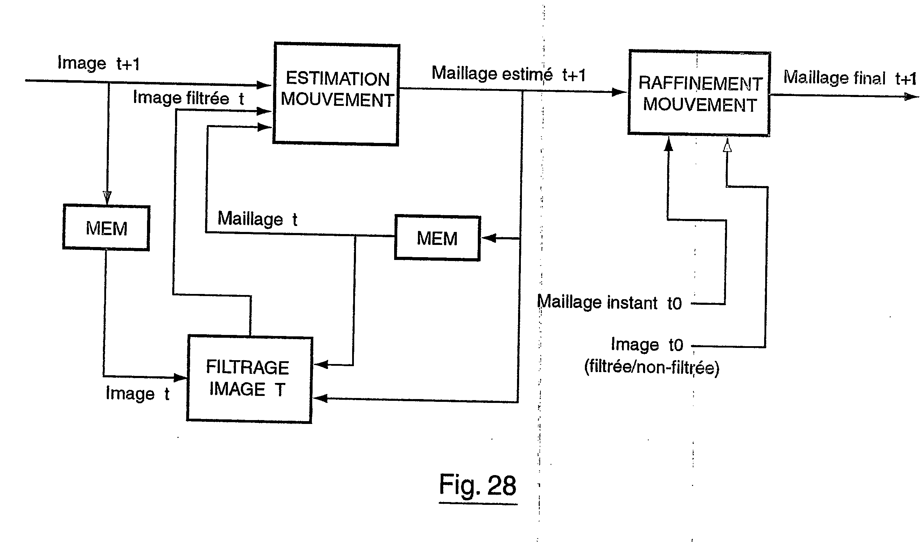

L'algorithme de suivi proposé est présenté sur la figure 28.

L'estimation du mouvement se fait en deux temps. Tout d'abord entre l'image t et t+1, puis un raffinement est effectué entre l'image t+1 et l'image initiale de la séquence traitée. Les images de référence peuvent être filtrées afin de prendre de limiter le bruit, mais aussi de prendre en compte les variations temporelles de texture (cf. mosaiques dynamiques décrites ci-après).

L'utilisation d'images filtrées est utilisée notamment pour la création de mosaïques d'objet vidéo où il est préférable d'utiliser la texture de la mosaïque à l'instant *t* plutôt que la texture de l'image originale à l'instant *t*. La phase de raffinement de mouvement entre l'image initiale et l'image à l'instant *t+1* est réalisée dans le but d'optimiser le rendu des images lors d'une compensation d'images de type *1 vers t* comme utilisé pour le schéma de codage vidéo proposé.

• Création de mosaïques dynamiques d'objets vidéos

Grâce au suivi du maillage au cours du temps, et à l'utilisation de masque support (des objets vidéos suivis, voire plus simplement de l'image dans le cas d'une séquence mono-objet), on peut créer une mosaïque de l'objet suivi. Cette mosaïque concatène l'information de texture observée au cours du temps, et permet ainsi de combler les zones de découvrement observées.

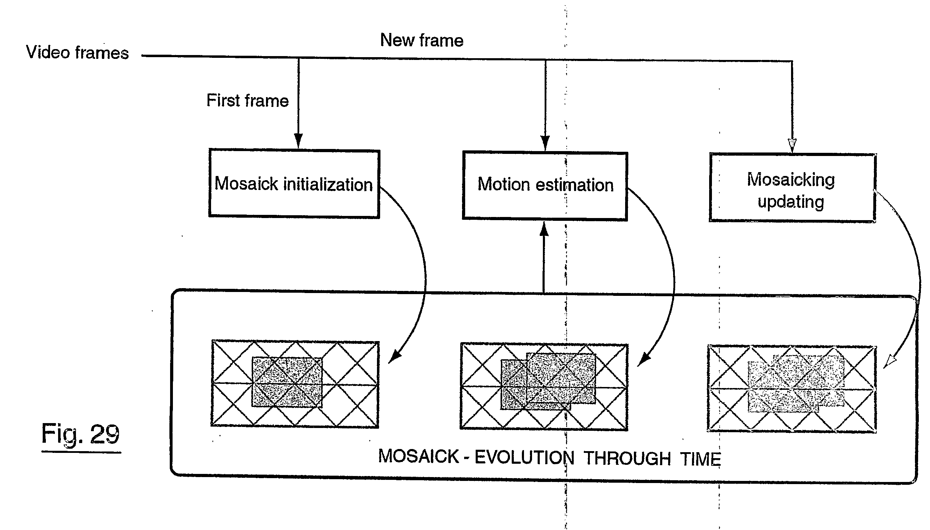

Le principe de construction de ces mosaïques est explicité sur la figure 29.

Par rapport à des approches de reconstruction d'images mosaïques classique, la technique proposée permet de gérer des objets déformables, et évoluant au cours du temps, tout en n'étant pas limité par des contraintes usuelles (objets éloignés de la caméra pour avoir l'hypothèse d'une profondeur relative faible, mouvement de caméra limité à des mouvements de type "pan and tilt",...). Ceci est réalisé grâce à la substitution dans la technique de création de mosaïques, de l'outil de compensation du mouvement global (mouvement affine, panoramique, homographique,...) par l'outil de compensation en mouvement par maillage hiérarchique.

La représentation du mouvement hiérarchique utilisée et son lien étroit avec une représentation ondelette (cf. [Marquant-2000]), permet de pouvoir étendre le mouvement au delà du support d'estimation.

L'image mosaïque créée est mise à jour progressivement au cours du temps à partir des valeurs observées dans les images. On distingue la mise à jour pour les zones nouvelles de celle pour les zones déjà présentes dans la mosaïque :

$$M(x,y,t) = \begin{cases} I(x+dx, y+dy, t) & \text{si l'on est dans une zone non initialisée} \\ M(x,y,t-1) + \alpha\left[I(x,y,t) - M(x,y,t-1)\right] & \text{si l'on est dans une zone déjà initialisée} \end{cases}$$

Le paramètre $\alpha$ permet de contrôler le filtrage effectué sur les variations temporelles de la mosaïque. Une valeur de 0 correspond à une mosaïque fixe. Une valeur de 1 correspond à un non filtrage des valeurs observées. Une valeur intermédiaire permet de réaliser un filtrage de Kalman temporel des valeurs observées.

Ce filtrage peut être utile pour débruiter le signal vidéo ou bien diminuer l'ordre de grandeur des hautes fréquences temporelles présentes dans l'information à coder (cf. codage de la mosaïque dynamique par l'intermédiaire d'une approche ondelettes 3D).

Une fois cette analyse effectuée, les mosaïques sont ensuite complétées. Tout d'abord on propage du futur vers le passé les valeurs obtenues aux différents instants, en ne propageant que sur les sites n'ayant pas encore de valeurs définies. Enfin, un padding est réalisé afin de compléter les zones non-définies (zones pour lesquelles aucune observation n'a pu être réalisée).

### 6.13 *Aspects complémentaires de l'invention*

Comme déjà mentionné, l'invention concerne le procédé de codage, le procédé de décodage et les signaux correspondants, mais également les aspects suivants :

• dispositif de codage

Un tel dispositif de codage comprend des moyens de codage par ondelettes appliqué sur des images de différence, dites résidus, obtenues par comparaison entre une image de source et une image estimée correspondante.

• dispositif de décodage

Un tel dispositif de décodage comprend avantageusement :

- des moyens de décodage du mouvement, en tenant compte d'au moins certains desdits résidus relatifs au mouvement, pour former des images de mouvement ;
- des moyens de décodage de la texture, en tenant compte d'au moins certains desdits résidus relatifs à la texture, pour former des images de texture ;
- des moyens de synthèse d'une séquence d'images décodées, correspondant à ladite séquence d'images source, par projection desdites images de texture sur lesdites images de mouvement.

o serveur de données

Un tel serveur de données, stockant et pouvant transmettre vers au moins un terminal au moins un signal représentatif d'une séquence d'images source et obtenu par un mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes, comprend des données numériques représentatives d'un codage par ondelettes appliqué sur des images de différence, dites résidus, obtenues par comparaison entre une image de source et une image estimée correspondante.

• support de données

Un tel support de données numérique, pouvant être lu par un terminal, porte au moins un signal représentatif d'une séquence d'images source et obtenu par un mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes. Il comprend des données numériques représentatives d'un codage par ondelettes appliqué sur des images de différence, dites résidus, obtenues par comparaison entre une image de source et une image estimée correspondante.

- programme d'ordinateur de codage

Un tel programme d'ordinateur comprend des instructions pour mettre en oeuvre un codage d'une séquence d'images source, mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes. Il comprend notamment des moyens de codage par ondelettes appliqué sur des images de différence, dites résidus, obtenues par comparaison entre une image de source et une image estimée correspondante.

- programme d'ordinateur de décodage

Un tel programme d'ordinateur comprend des instructions pour mettre en oeuvre un décodage d'une séquence d'images source, codée par un codage mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes. Ledit codage par ondelettes étant appliqué sur des images de différence, dites résidus, obtenues par comparaison entre une image de source et une image estimée correspondante, il comprend :

- des moyens de décodage du mouvement, en tenant compte d'au moins certains desdits résidus relatifs au mouvement, pour former des images de mouvement ;
- des moyens de décodage de la texture, en tenant compte d'au moins certains desdits résidus relatifs à la texture, pour former des images de texture ;

des moyens de synthèse d'une séquence d'images décodées, correspondant à ladite séquence d'images source, par projection desdites images de texture sur lesdites images de mouvement.

**ANNEXE 1 : Filtres utilisés**

1. Filtre d'Antonini : 7/9 Filter from M. Antonini, M. Barlaud, P. Mathieu, and I. Daubechies, "Image coding using wavelet transform", IEEE Transactions on Image Processing", Vol. pp. 205-220, 1992.

AntoniniSynthesis = { -6.453888262893856e-02,
-4.068941760955867e-02,
4.180922732222124e-01,
7.884856164056651e-01,
4.180922732222124e-01,
-4.068941760955867e-02,
-6.453888262893856e-02 };
AntoniniAnalysis = { 3.782845550699535e-02,
-2.384946501937986e-02,
-1.106244044184226e-01,
3.774028556126536e-01,

8.526986790094022e-01,
3.774028556126537e-01,
-1.106244044184226e-01,
-2.384946501937986e-02,
3.782845550699535e-02 };

2. Filtre 5/3 : Cohen Daubechies Feauveau bi orthogonal (2,2)

$$\text{Analyse} = -\frac{1}{4\sqrt{2}}(1 + z^{-4}) + \frac{2}{4\sqrt{2}}(z^{-1} + z^{-3}) + \frac{6}{4\sqrt{2}} z^{-2}$$

$$\text{Synthèse} = \frac{1}{2\sqrt{2}}(1 + z^{-2}) - \frac{2}{2\sqrt{2}} z^{-1}$$

3. Filtre 5/3 en version lifting :

$$\text{Etape P} = \frac{1}{4}(1 + z^{-1})$$

$$\text{Etape U} = -\frac{1}{2}(z + 1)$$

Mise à échelle sur pair : $S = \sqrt{2}$

Mise à échelle sur impair : $S = \frac{1}{\sqrt{2}}$

**Annexe 2 : Principe du lifting**

La transformation d'un signal par un banc de filtres peut se faire dans deux versions différentes : soit une version convolutive, soit une version lifting. La version convolutive est la plus connue et la plus coûteuse en coût de calcul et erreurs d'arrondis. Pour la transformation ondelette d'un signal 1D s(t) par deux filtres passe-haut H et passe-bas L, la transformée ondelette convolutive est la suivante :

$$bf(t) = \sum_{k} L(k) * s(t - k)$$

$$hf(t) = \sum_{k} H(k) * s(t - k),$$

avec bf les basses fréquences et hf les hautes fréquences.

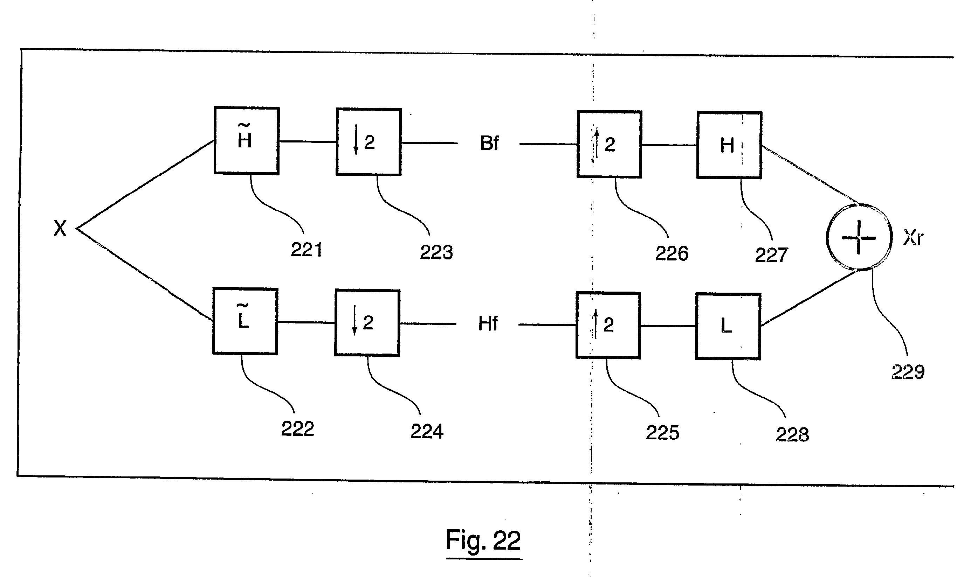

Les basses et hautes fréquences sont ensuite décimées par deux pour garder les mêmes nombres d'information que dans le signal initial. La figure 22 montre la décomposition d'un signal X en basses et hautes fréquences à l'aide de filtres passe-haut 221 et passe-bas 222, puis la décimation par deux 223, 224.

La deuxième moitié de la figure montre la reconstruction du signal : expansion des signaux bas 225 et haut 226 par deux (en intercalant des zéros entre chaque valeur) et filtrage avec les filtres de synthèse 227 et 228, puis recombinaison 229.

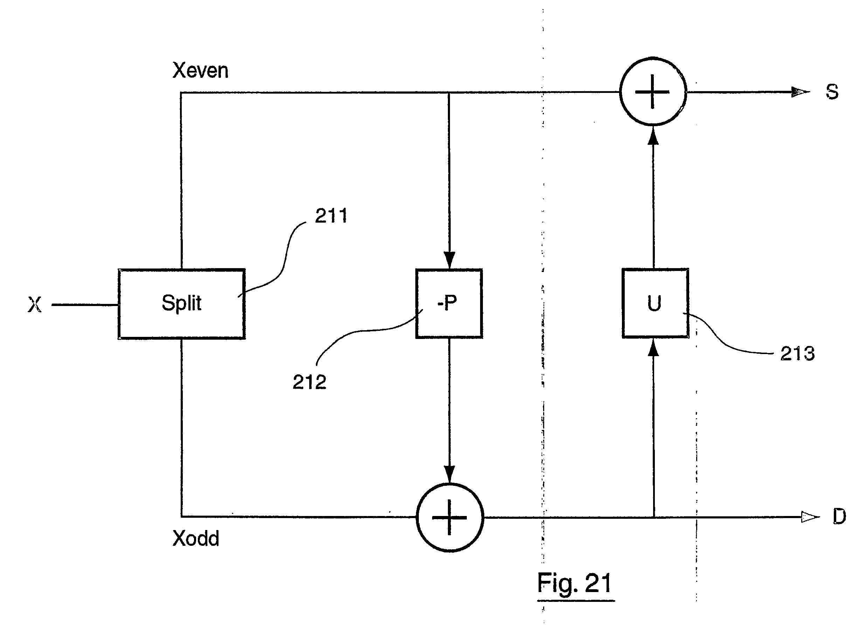

La version lifting décompose le signal en composantes basses et hautes fréquences comme la version convolutive, mais son schéma a l'avantage de gérer les erreurs d'arrondis et d'avoir un coût de calcul moindre. En lifting (voir figure 21), le signal à transformer est d'abord séparé en deux par l'opérateur SPLIT 211 pour obtenir Xeven et Xodd.

En fait, Xeven contient les échantillons du signal d'indice pairs et Xodd les impairs.

Ensuite, l'opérateur P 212 prédit le signal impair par le signal pair : $\hat{X}odd = Xeven,$ la prédiction $\hat{X}odd$ est ôtée à Xodd, le signal résultant est la composante haute fréquence du signal. Le signal paire est ensuite mis à jour par l'opérateur U 213. le signal résultant est la composante basse fréquence du signal. Une étape de lifiting est constituée de deux filtrages P et U. Une transformée ondelette est une succession d'étapes de lifting appliquée à chaque fois sur le signal mis à jour.

L'inversion du schéma lifting est simple et rapide : il suffit d'inverser les additions par des soustractions, les opérateurs P et U ne changent pas. La version lifting d'un filtre convolutif peut-être calculée par division euclidienne des filtres convolutifs, mais des filtres de lifting peuvent être créés sans avoir d'équivalent en filtre convolutif. Dans notre codeur, les seuls filtres utilisés en lifting sont des filtres déjà existants en convolutif, la construction du schéma lifting à partir de filtres convolutifs existants est la suivante :

On considère l'analyse et la synthèse d'un signal X par une transformée ondelette selon la figure 22. Les basses fréquences Bf sont obtenues par filtrage du signal X avec le filtre passe-bas $\tilde{h}$, puis décimation du signal filtré, les hautes fréquences Hf par filtrage avec $\tilde{g}$ et décimation. La reconstruction du signal est effectuée par filtrage avec les filtres g et h, on obtient le signal reconstruit Xr.

Nous allons développer plus explicitement le calcul des basses fréquences Bf à l'aide du filtre $\tilde{h}$ :

$$Bf_0 = x_0 * \widetilde{H}_0 + x_1 * \widetilde{H}_1 + x_2 * \widetilde{H}_2 + x_3 * \widetilde{H}_3 + ...$$

$$Bf_1 = x_1 * \widetilde{H}_0 + x_2 * \widetilde{H}_1 + x_3 * \widetilde{H}_2 + x_4 * \widetilde{H}_3 + ...$$

$$Bf_2 = x_2 * \widetilde{H}_0 + x_3 * \widetilde{H}_1 + x_4 * \widetilde{H}_2 + x_5 * \widetilde{H}_3 + ...$$

$$Bf_3 = x_3 * \widetilde{H}_0 + x_4 * \widetilde{H}_1 + x_5 * \widetilde{H}_2 + x_6 * \widetilde{H}_3 + ...$$

Après filtrage du signal X par le passe-bas, nous décimons les coefficients transformés, les coefficients restant sont :

$$Bf_0 = x_0 * \widetilde{H}_0 + x_1 * \widetilde{H}_1 + x_2 * \widetilde{H}_2 + x_3 * \widetilde{H}_3 + ...$$

$$Bf_2 = x_2 * \widetilde{H}_0 + x_3 * \widetilde{H}_1 + x_4 * \widetilde{H}_2 + x_5 * \widetilde{H}_3 + ...$$

On remarque l'on peut réécrire le calcul des coefficients basses fréquences sous une forme polyphase, on sépare les coefficients d'indice pair et impair: $Bf = \tilde{h}_e x_e + \tilde{h}_o x_o$, xe et xo les coefficients du signal d'indice pair et impair.

De la même manière, on obtient les hautes fréquences, ainsi que le signal reconstruit. Les équations de l'analyse et de la synthèse sont alors:

- Analyse

$$Bf = \widetilde{h}_e x_e + \widetilde{h}_o x_o \quad,$$

$$Hf = \widetilde{g}_e x_e + \widetilde{g}_o x_o{}'$$

- Synthèse
  Xre=he(Bf)+ge(Hf)
  Xro=ho(Bf)+go(Hf)

On peut ainsi définir deux matrices polyphases duales pour l'analyse et la synthèse du signal $\tilde{P}$ et P:

$$\widetilde{P} = \begin{bmatrix} \widetilde{h}_e & \widetilde{h}_o \\ \widetilde{g}_e & \widetilde{g}_o \end{bmatrix} \text{ et } P = \begin{bmatrix} h_e & g_e \\ h_o & g_o \end{bmatrix}$$

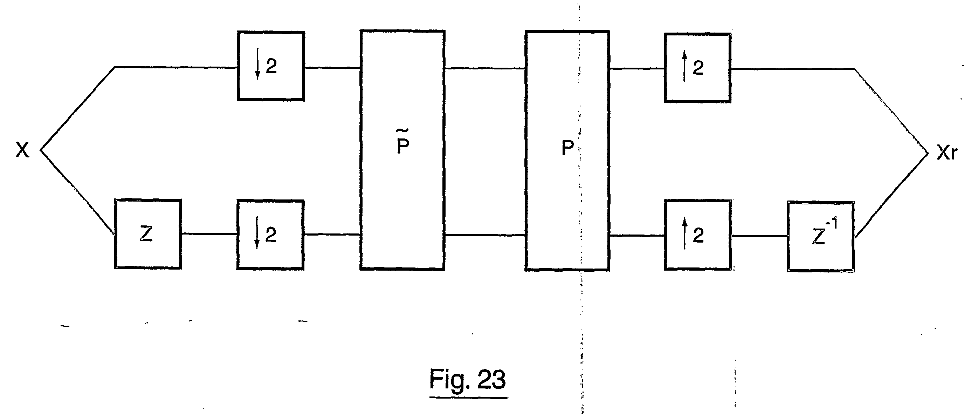

La figure 23 illustre la transformée ondelette correspondant à celle définie précédemment avec les matrices polyphases. On montre que l'on peut factoriser $\widetilde{P}$ sous la forme:

$$\widetilde{P} = \begin{bmatrix} k & 0 \\ 0 & 1/K \end{bmatrix}\begin{bmatrix} 1 & u \\ 0 & 1 \end{bmatrix}\begin{bmatrix} 1 & 0 \\ -p & 1 \end{bmatrix}$$

La figure 17 montre un étage de lifting et un étage de lifting dual. La transformée ondelette est une succession de ces étages. La transformée inverse du lifting s'obtient facilement en remplaçant les additions par des soustractions.

### Annexe 3 : Algorithme 1: projection de l'image k sur l'image i

Entrées de l'algorithme:
Mask(i) = masque de définition de l'image i, indique quels pixels de l'image i sont définis
Mask(k) = masque de définition de l'image k
$m_i$ = positions du maillage de l'image i
$m_k$ = positions du maillage de l'image k
Sorties de l'algorithme :
$I_r$ = l'image à reconstruire, l'image k projetée sur l'image i
MaskPrediction = masque de définition de l'image à reconstruire $I_r$
Pour tout pixel $(x_{j,r}, y_{j,r})$ de $I_r$,
si $(x_{j,r}, y_{j,r})$ défini dans Mask(i)
déterminer t le triangle de $m_i$ contenant $(x_{j,r}, y_{j,r})$ ;
calculer les poids $w_{1,ti}$, $w_{2,ti}$, $w_{3,ti}$ de $(x_{j,r}, y_{j,r})$ associés aux noeuds de t ;
déterminer la nouvelle position de $(x_{j,r}, y_{j,r})$ dans $m_k$ par:
$x_{j,mk} = w_{1,ti}{}^* x_{1,mk} + w_{2,ti}{}^* x_{2,mk} + w_{3,ti}{}^* x_{3,mk}$ où $x_{1,mk}$, $x_{2,mk}$, $x_{3,mk}$ sont les positions en x de noeuds de t ;
$y_{j,mk} = w_{1,ti}{}^* y_{1,mk} + w_{2,ti}{}^* y_{2,mk} + w_{3,ti}{}^* y_{3,mk}$;
si $(x_{j,mk}, y_{j,mk})$ défini dans Mask(k)
calculer luminance de $(x_{j,mk}, y_{j,mk})$ par interpolation bilinéaire ;
MaskPrediction$(x_{j,r}, y_{j,r})$ = vrai ;
finsi
sinon MaskPrediction$(x_{j,r}, y_{j,r})$ = faux ;
finsi
sinon MaskPrediction$(x_{j,r}, y_{j,r})$ = faux ;
finpour

### Annexe 4 : Estimation multi-grille

#### 1. Principe général

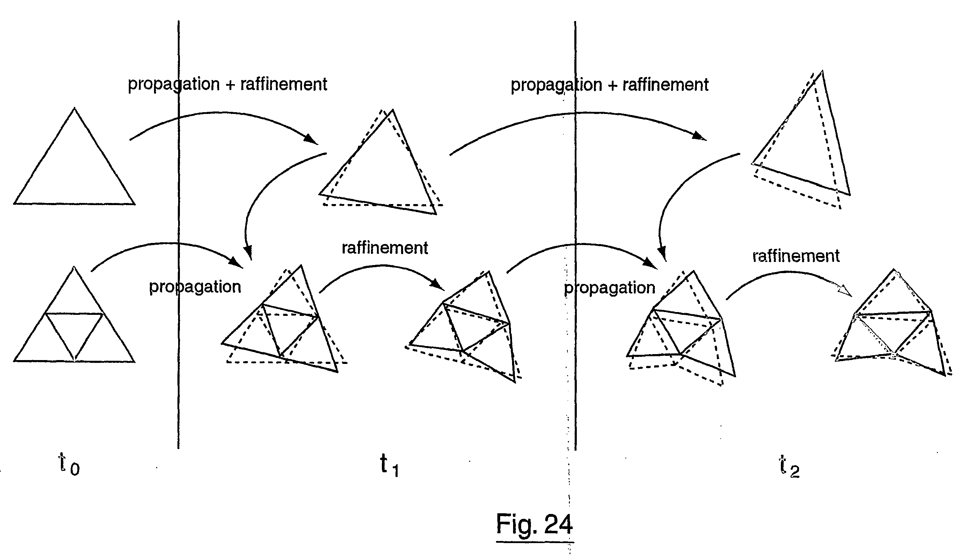

Lors de la phase de suivi du maillage au cours du temps, apparaît le problème que les maillages sur lesquels est estimé le mouvement, ne sont plus des maillages réguliers hiérarchiques. L'estimation hiérarchique du mouvement devient alors non aisée. Dans [Marquant-2000], une technique était ainsi proposée pour pouvoir estimer le mouvement avec des maillages hiérarchiques, en propageant l'estimation du mouvement effectué sur des triangles réguliers d'un niveau de hiérarchie donné sur le niveau plus fin suivant (cf. figure 24). Cette approche peut alors devenir rapidement sous-optimale dans le cas de déformations prononcées du maillage, où le mouvement estimé sur de grands triangles peut être assez différent du mouvement réel de la structure déformée (le support d'estimation du grand triangle est en effet différent du support des mailles sensées constituées ce triangle).
Afin de résoudre ce problème, une technique de minimisation de type multi-grilles a alors été mise en place. Cette technique repose sur la recherche d'une déformation du maillage définie par l'intermédiaire d'un jeu de paramètres réduit. Pour se faire, on tire profit de la structure hiérarchique du maillage.

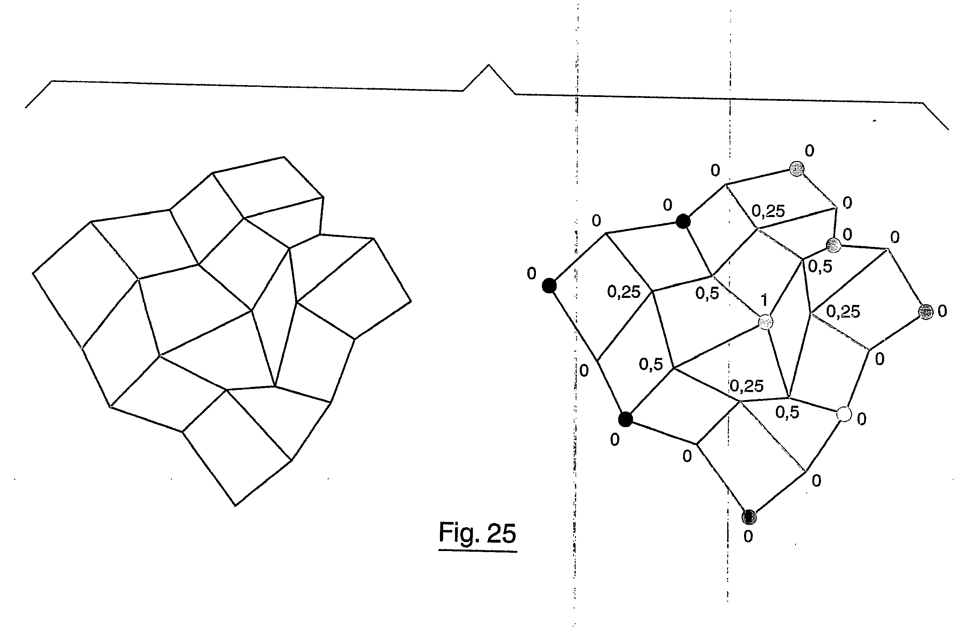

On note $dp_i^l$ le déplacement associé au noeud indicé i, au niveau de hiérarchie de maillage 1. Un jeu réduit de paramètres pour obtenir un champ de déformation au niveau hiérarchique 1, peut alors être obtenu à partir du champ de déformation du niveau 1-1 : le déplacement $dp_j^{l-1}$ est répercuté sur les noeuds indicé i du niveau 1 comme suit (cf. également la figure 25 pour le cas d'un maillage quadrangulaire) :

$$\begin{cases} dp_j^{l-1} & \text{si le noeud i est le fils direct du noeud j} \\ \dfrac{1}{2}\, dp_j^{l-1} & \text{si le noeud i est situé au milieu d'un arc au contact du noeud j} \end{cases}$$

Cette relation entre les déplacements des niveaux 1 et 1-1 peut alors s'écrire sous forme matricielle : $\left[dp_i^l\right] = H_{l-1}^l\left[dp_j^{l-1}\right]$, et de façon générale, en appliquant successivement cette formule : $\left[dp_i^l\right] = H_{l-k}^l\left[dp_j^{l-k}\right]$ avec $H_{l-k}^l = H_{l-1}^l\ H_{l-2}^{l-1}\ ...\ H_{l-k}^{l-k+1}$. Si l'on utilise la déformation optimale de ce type minimisant l'erreur de prédiction, on peut alors montrer que le système définissant les déplacements optimaux se transforme de la formule générale au niveau $l$ : $A^l\left[\Delta dp_i^l\right] = B^l$ en le système : $\left({}^t H_{l-k}^l . A^l\ H_{l-k}^l\right)\left[\Delta dp_j^{l-k}\right] = \left({}^t H_{l-k}^l . B^l\right)$.

Cette estimation multi-grille est alors utilisée dans le schéma d'estimation hiérarchique du mouvement en estimant le mouvement non plus sur une maillage de moindre finesse, mais à l'aide des déplacements des noeuds de ces maillages plus grossiers.

2. <u>Multi-grille géométrique</u>

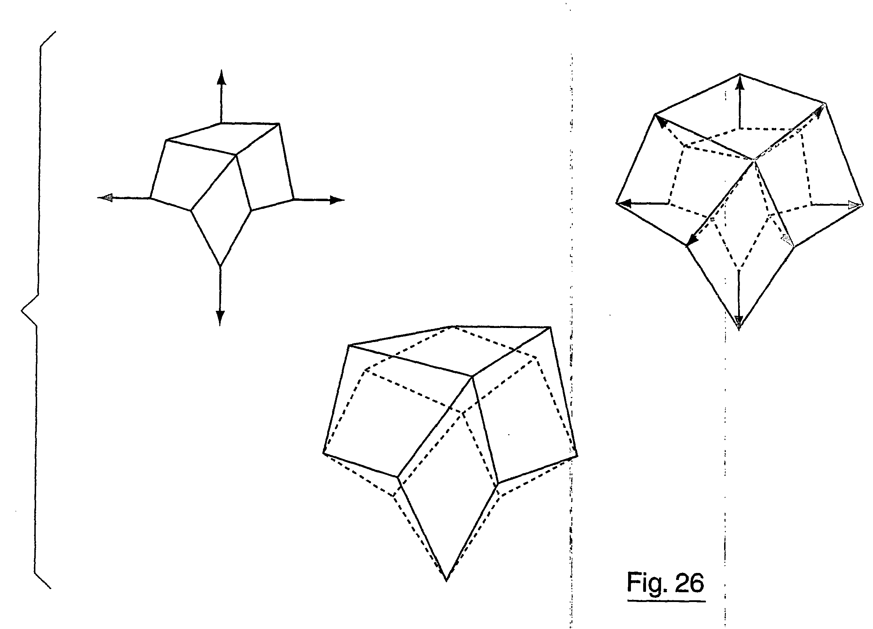

Dans l'approche présentée précédemment, on peut remarquer que les pondérations entre les noeuds de niveaux de hiérarchies successives (1 et 0.5) sont quelques peu empiriques. En fait, ces poids sont les poids à appliquer sur un maillage régulier afin de conserver la structure régulière du maillage de niveau inférieur. Toutefois, lorsque le maillage est déformé, l'utilisation de cette pondération ne garantit pas de conserver la structure des maillages inférieurs. Ainsi sur la figure 26, dans le cas d'un zoom global, la structure du maillage n'est plus conservée (la déformation appliquée sur le maillage de niveau inférieur ne correspond pas à un zoom global).

Afin de remédier à ce problème, nous proposons donc de modifier la pondération utilisée sur les noeuds lors de la répercussion du déplacement d'un niveau à l'autre. En observant qu'entre deux niveaux de hiérarchie de maillage successifs, les noeuds du maillage fin peuvent s'exprimer comme une combinaison linéaire des noeuds du niveau hiérarchique supérieur (utilisation d'une représentation barycentrique pour chaque noeud par rapport au triangle de niveau grossier contenant ce noeud), on va alors utiliser cette propriété pour la répercution du déplacement des noeuds.

Au niveau du maillage fin, on peut distinguer deux types de noeuds ; les noeuds fils directs de noeuds du niveau supérieur, et les noeuds fils d'une arête du niveau supérieur. Pour le premier type de noeud, on a alors une répercussion directe, et un seul noeud intervient alors. Pour le deuxième type de noeud, dans la formule de pondération, potentiellement quatre noeuds peuvent intervenir (les noeuds des deux triangles de part et d'autre de l'arête). On utilise alors les deux noeuds extrémités de l'arête ainsi que le noeud supplémentaire du triangle du niveau supérieur contenant le noeud. Dans le cas, ou le noeud fils est situé sur l'arrête, uniquement les noeuds extrémités de l'arête sont utilisés (la coordonnée barycentrique sur les autres noeuds étant nulle). La matrice résultante $H_{l-1}^l$ est toujours alors très creuse (pas plus de 3 valeurs non nulle par ligne). Afin d'obtenir la matrice de passage entre des niveaux de hiérarchies non consécutifs, on utilise alors la formule de composition précédente : $H_{l-k}^l = H_{l-1}^l\ H_{l-2}^{l-1}\ ...\ H_{l-k}^{l-k+1}$.

3. <u>Robustification de l'algorithme d'estimation du mouvement</u>

L'algorithme d'estimation du mouvement repose sur une minimisation différentielle du mouvement, et peut être rapidement perturbé par le bruit de calcul. Aussi est-il nécessaire de robustifier l'algorithme d'estimation, notamment au niveau de la résolution du système d'équation à résoudre pour trouver les incréments de déplacements [$\Delta dp_i$]. La solution proposée dans [Lechat-1999] est alors d'utiliser une technique de Levenberg-Marquardt afin de reconditionner le système linéaire à résoudre. Cette technique consiste à augmenter dans le système $A.X=B$, la diagonale de la matrice $A$ tant que l'on n'observe pas de diminution de la fonctionnelle à minimiser. Cette augmentation de la diagonale se fait sur toutes les lignes de la matrice, et a pour conséquence de freiner alors le déplacement de tous les noeuds et non uniquement des noeuds à problème.

Plusieurs modifications ont été alors testées afin de limiter ce phénomène, et de limiter d'autres dérives, en proposant des augmentations des termes diagonaux de la matrice A de façon limité et bien adaptée :

*3.1 Reconditionnement pour limiter le déplacement des noeuds*

De par l'utilisation d'une technique de minimisation différentielle, les incréments de déplacements trouvés doivent être limité (typiquement de l'ordre de 1 pixel à la résolution traitée). Aussi lors de la résolution du système AX=B, un contrôle est effectué afin de s'assurer que toutes les composantes sont bien inférieures au déplacement maximal toléré. Dans le cas contraire, une augmentation du terme diagonal de la matrice A rattaché à la ligne dudit coefficient est réalisé. Cette augmentation est réalisée de façon similaire à la technique de Levenberg Marquard : $A'_{ii=(1+\lambda)}A_{ii}$, et ceci autant de fois qu'il soit nécessaire afin de respecter la contrainte.

*3.2 Reconditionnement par rapport au problème d'ouverture*

Dans le cadre de l'estimation du mouvement, le problème d'ouverture est un problème fréquemment rencontré. Ce problème est lié au fait que de par l'orientation privilégié du gradient de texture, l'information de mouvement locale ne peut être définie de façon fiable que dans une seule direction (i.e. la direction du gradient). Dans le cas de l'estimation sur un maillage, ce problème est limité (car l'influence d'un noeud porte sur les pixels contenus dans les triangles au contact de ce noeud), toutefois il apparaît dans des zones ayant une orientation de texture marquée (comme par exemple au niveau de frontières entre deux zones faiblement texturées où l'on peut alors observer un glissement des mailles le long des contours).

Ce phénomène peut s'expliquer plus clairement au niveau de la résolution du système A.X=B. De par sa nature, ce système n'est pas à diagonale dominante, et peut avoir un grand nombre de solutions « admissibles ». Ainsi la technique du gradient conjugué peut trouver des solutions telles que $\|A.X\text{-}B\|$ soit faible. Or, ceci peut engendrer un grand nombre de solution si la matrice A possède des valeurs propres faibles (comme cela peut être le cas pour le problème classique de l'ouverture).

L'approche proposée consiste alors, pour chaque noeud, à identifier la sensibilité de ces noeuds par rapport à un bruit sur le vecteur de déplacement optimal. On peut ainsi observer que la norme du bruit sur $\|A.X\text{-}B\|$ lié à un bruit de déplacement sur $(dx_i, dy_i)$, peut s'exprimer comme une forme quadratique (en ne considérant que ce bruit) : $A_{xi,xi}.dx_i^2 + 2.A_{xi.yi}.dx_i.dy_i + A_{yi,yi}.dy_i^2$. Le terme $A_{x,x}$ correspondant à la norme $L_2$ au carré de la ligne de coefficients associée à l'inconnu $dx_i$ (idem pour le terme $A_{yy}$), le terme $A_{xy}$ correspondant au produit scalaire entre les lignes de la matrice A rattachées aux inconnues $dx_i$ et $dy_i$. Une rotation de repère peut alors être effectuée sur $(dx_i, dy_i)$ afin d'avoir une forme quadratique de la forme $A'_{xi,xi}.du_i^2 + A'_{yi,yi}.dv_i^2$. $\lambda_1$ et $\lambda_2$ représentent alors la sensibilité du système pour certaines directions de déplacement du noeud considéré (une valeur faible indique que le système est mal conditionné sur la variable associée, une valeur forte indique un bon conditionnement). Afin de robustifier l'algorithme, on procède alors, suite à un changement de variable sur le système (rotation pour chaque noeud), à une augmentation de la diagonale la plus faible sur chaque noeud afin d'avoir des valeurs de $\lambda_1$ et $\lambda_2$ de même ordre de grandeur.

*3.3 Reconditionnement par rapport à un gradient minimal de texture*

Une autre source de mauvais conditionnement de la matrice A, porte sur la présence de zones où le gradient de l'image est faible. Pour cela, on introduit alors la notion de gradient minimal moyen. En regardant l'expression des coefficients de la matrice A, on peut observer que les termes diagonaux s'expriment sous la forme d'une somme pondérée de gradients. En calculant alors un système normalisé $A_{norm}$, où l'on omet dans la formule les termes de gradients d'images. Le reconditionnement est alors effectué en imposant que l'on ait : $A_{i,i} > \nabla I_{min}.[A_{min}]_i$.

Expérimentalement, on peut observer qu'une valeur de 10 pour ce terme de gradient minimal donne en général de bons résultats n'engendrant pas un lissage excessif (cet effet de lissage est du à un lissage par rapport à un mouvement global calculé sur une hiérarchie de maillage plus grossière).

*3.4 Reconditionnement par rapport au support d'estimation*

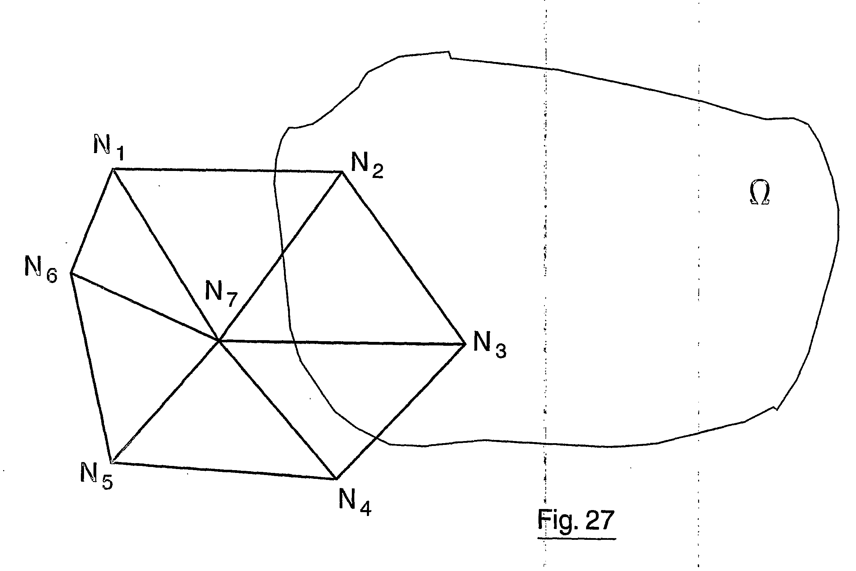

L'introduction d'un support d'estimation $\Omega$ dans la phase d'estimation de mouvement induit également des problèmes de conditionnement pour le système linéaire à résoudre. Par exemple, sur la figure 27, on peut observer que le noeud $N_1$ est un noeud qui peut être mal conditionné car son influence sur les points au sein du triangle $N_1N_2N_7$ est limité (et donc un grand déplacement peut être toléré sur ce noeud). Afin alors de limiter ce problème, on introduit une notion de lissage sur les noeuds. Toutefois, l'introduction d'un lissage peut limiter la qualité de l'estimateur de mouvement.

Aussi le lissage sur les noeuds n'est-il effectué que sur les noeuds ayant des supports d'estimation non complet.

On ajoute alors entre deux noeuds voisins i et j, une énergie de lissage de la forme : $\mu$ ($[A_{norm,full}]_j$-$[A_{norm,\Omega}]_j$) <$(dp_i$-$dp_j)^2$. $A_{norm,full}$ et $A_{norm,\Omega}$ représentent les systèmes d'équations « normalisés » (i.e. sans l'utilisation du terme de gradient de l'image) respectivement avec un masque complet, et avec le masque $\Omega$. $\mu$ est le terme de pondération permettant de contrôler la force du lissage ; un bon ordre de grandeur pour ce terme est de prendre la valeur du gradient minimal de texture utilisé précédemment.

Il est à noter que ces différentes opérations de reconditionnement peuvent être effectuées sur les différents systèmes linéaires à résoudre. L'utilisation de pondération utilisant les matrices normalisées, permet de limiter le réglage des paramètres introduit en prenant en compte automatiquement les problèmes de changement de résolution, et de taille de triangle variable. Enfin, le schéma proposé par Levenberg-Marquardt est utilisé suite à ces divers reconditionnements uniquement si l'on n'observe pas une diminution de la fonctionnelle à minimiser.

**Revendications**

1. Procédé de codage d'une séquence d'images source, mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes,

   ledit procédé comprenant les étapes suivantes :

   - estimation du mouvement, de façon à obtenir lesdites images de mouvement ;
   - projection de chacune desdites images source sur au moins une grille de référence, de façon à obtenir lesdites images de texture, sur lesquelles l'effet du mouvement a été annulé ;

   **caractérisé en ce qu'**il comprend également les étapes suivantes :

   - comparaison entre une image de mouvement et une image estimée correspondante, de façon à obtenir une image de différence de mouvement, dite résidu de mouvement ;
   - comparaison entre une image de texture et une image estimée correspondante, de façon à obtenir une image de différence de texture ;
   - codage indépendant, par ondelettes, desdits résidus de mouvement et desdits résidus de texture.

2. Procédé de codage selon la revendication 1, **caractérisé en ce que** ladite comparaison met en oeuvre une différence avec une image interpolée à partir d'au moins la première et/ou de la dernière image de ladite séquence.

3. Procédé de codage selon l'une quelconque des revendications 1 et 2, **caractérisé en ce qu'**on effectue un codage temporel de ladite texture, redressée par ledit mouvement préalablement codé selon l'axe temporel, à l'aide d'un codage par ondelettes.

4. Procédé de codage selon l'une quelconque des revendications 1 à 3, **caractérisé en ce qu'**il comprend un codage de la texture comprenant un codage temporel par ondelettes suivi d'un codage spatial par ondelettes.

5. Procédé de codage selon l'une quelconque des revendications 1 à 4, **caractérisé en ce qu'**il comprend un codage du mouvement prenant en compte un maillage.

6. Procédé de codage selon l'une quelconque des revendications 1 à 5, **caractérisé en ce qu'**il comprend un codage du mouvement comprenant un codage temporel par ondelettes suivi d'un codage spatial par ondelettes.

7. Procédé de codage selon l'une quelconque des revendications 1 à 6, **caractérisé en ce que** lesdites images source sont regroupées par blocs d'images comprenant un nombre variable (N) d'images source.

8. Procédé de codage selon la revendication 7, **caractérisé en ce que** deux blocs d'images successifs comprennent au moins une image commune.

9. Procédé de codage selon l'une quelconque des revendications 1 à 8, **caractérisé en ce que**, dans chacun desdits blocs d'images, on estime le mouvement de toutes les images d'un bloc d'images à partir de la première image dudit bloc.

**EP 1 604 529 B1**

**10.** Procédé de codage selon l'une quelconque des revendications 1 à 9, **caractérisé en ce que** ladite étape de projection utilise deux grilles de référence représentant respectivement la première et la dernière images du bloc considéré.

**11.** Procédé de codage selon l'une quelconque des revendications 1 à 10, **caractérisé en ce qu'**il comprend une étape de projection d'une image sur au moins une grille de référence, correspondant à une grille d'échantillonnage définie par la position des noeuds d'un maillage dans une image, de façon à obtenir un masque de texture, et une étape de détection d'au moins une zone de support d'image restant indéfinie après ladite projection d'une image, du fait de l'utilisation d'une grille de référence correspondant à une autre image, et une étape de remplissage (« padding ») de la ou desdites zones de support d'image indéfinies.

**12.** Procédé de codage selon l'une quelconque des revendications 1 à 11, **caractérisé en ce qu'**on applique une antisymétrie aux coefficients d'ondelettes correspondant à un bord d'une image, de façon à simuler un signal à support de longueur infinie.

**13.** Procédé de codage selon l'une quelconque des revendications 1 à 12, **caractérisé en ce que** les données codées sont réparties en au moins deux couches, une couche basse comprenant des données permettant de reconstruire une image de qualité grossière et une couche haute permettant d'affiner la qualité de ladite image grossière.

**14.** Signal représentatif d'une séquence d'images source et obtenu par un procédé de codage selon l'une quelconque des revendications 1 à 13, et mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes, **caractérisé en ce qu'**il comprend des premières données numériques représentatives d'un codage par ondelettes appliqué sur des images de différence de mouvement, dites résidus de mouvement, obtenues par comparaison entre une image de mouvement et une image estimée correspondante, et des secondes données numériques représentatives d'un codage par ondelettes appliqué sur des images de différence de texture, dites résidus de texture, obtenues par comparaison entre une image de texture et une image estimée correspondante, sur lesquelles l'effet du mouvement a été annulé, lesdites premières données étant codées indépendamment desdites secondes données.

**15.** Signal selon la revendication 14, **caractérisé en ce qu'**il est constitué d'au moins deux couches, une couche basse comprenant des données permettant de reconstruire une image de qualité grossière et une couche haute permettant d'affiner la qualité de ladite image grossière.

**16.** Signal selon l'une quelconque des revendications 14 et 15, **caractérisé en ce qu'**il comprend trois champs pour décrire un objet, représentatifs respectivement de son mouvement, de sa texture et de sa forme.

**17.** Procédé de décodage d'une séquence d'images source, codée par un codage mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes, **caractérisé en ce que**, ledit codage par ondelettes étant appliqué sur des images de différence, dites résidus, obtenues par comparaison entre une image de source et une image estimée correspondante, il comprend les étapes suivantes :

- décodage du mouvement, en tenant compte d'au moins certains desdits résidus relatifs au mouvement, pour former des images de mouvement ;
- décodage de la texture, en tenant compte d'au moins certains desdits résidus relatifs à la texture, pour former des images de texture ;
- synthèse d'une séquence d'images décodées, correspondant à ladite séquence d'images source, par projection desdites images de texture sur au moins une grille de référence correspondant auxdites images de mouvement, de façon à obtenir lesdites images décodées, sur lesquelles l'effet du mouvement a été restitué.

**18.** Procédé de décodage selon la revendication 17, **caractérisé en ce qu'**il comprend une étape de mesure de la qualité de ladite séquence d'images décodées, par analyse de la distorsion entre les images de texture originales et les images de texture décodées.

**33**

**19.** Procédé de décodage selon l'une quelconque des revendications 17 et 18, **caractérisé en ce qu'**il comprend une étape de gestion des retournements générés par ladite estimation du mouvement.

**20.** Procédé de décodage selon l'une quelconque des revendications 17 à 19, **caractérisé en ce qu'**il comprend une étape d'arrêt du traitement desdits résidus, lorsqu'un niveau de qualité et/ou une quantité de traitements à effectuer est atteint.

**21.** Dispositif de codage d'une séquence d'images source, mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes,
ledit dispositif comprenant :

- des moyens d'estimation du mouvement, de façon à obtenir lesdites images de mouvement ;
- des moyens de projection de chacune desdites images source sur au moins une grille de référence, de façon à obtenir lesdites images de texture, sur lesquelles l'effet du mouvement a été annulé ;

**caractérisé en ce qu'**il comprend également :

- des moyens de comparaison entre une image de mouvement et une image estimée correspondante, de façon à obtenir une image de différence de mouvement, dite résidu de mouvement ;
- des moyens de comparaison entre une image de texture et une image estimée correspondante, de façon à obtenir une image de différence de texture ;
- des moyens de codage indépendant, par ondelettes, desdits résidus de mouvement et desdits résidus de texture.

**22.** Dispositif de décodage d'une séquence d'images source, codée par un codage mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes,
**caractérisé en ce que**, ledit codage par ondelettes étant appliqué sur des images de différence, dites résidus, obtenues par comparaison entre une image de source et une image estimée correspondante, il comprend :

- des moyens de décodage du mouvement, en tenant compte d'au moins certains desdits résidus relatifs au mouvement, pour former des images de mouvement ;
- des moyens de décodage de la texture, en tenant compte d'au moins certains desdits résidus relatifs à la texture, pour former des images de texture ;
- des moyens de synthèse d'une séquence d'images décodées, correspondant à ladite séquence d'images source, par projection desdites images de texture sur au moins une grille de référence correspondant auxdites images de mouvement, de façon à obtenir lesdites images décodées, sur lesquelles l'effet du mouvement a été restitué.

**23.** Serveur de données **caractérisé en ce qu'**il comprend des moyens pour mettre en oeuvre le procédé de codage selon l'une quelconque des revendications 1 à 13.

**24.** Support de données numérique pouvant être lu par un terminal, **caractérisé en ce qu'**il porte au moins un signal selon l'une quelconque des revendications 14 à 16, obtenu à l'aide d'un procédé de codage selon l'une quelconque des revendications 1 à 13.

**25.** Programme d'ordinateur, **caractérisé en ce qu'**il comprend des instructions pour mettre en oeuvre un codage d'une séquence d'images source, mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes, ledit programme d'ordinateur comprenant des instructions pour effectuer :

- une estimation du mouvement, de façon à obtenir lesdites images de mouvement ;
- une projection de chacune desdites images source sur au moins une grille de référence, de façon à obtenir lesdites images de texture, sur lesquelles l'effet du mouvement a été annulé ;

**caractérisé en ce qu'**il comprend également des instructions pour effectuer :

- une comparaison entre une image de mouvement et une image estimée correspondante, de façon à obtenir une image de différence de mouvement, dite résidu de mouvement ;
- une comparaison entre une image de texture et une image estimée correspondante, de façon à obtenir une image de différence de texture ;
- codage indépendant, par ondelettes, desdits résidus de mouvement et desdits résidus de texture.

26. Programme d'ordinateur, **caractérisé en ce qu'**il comprend des instructions pour mettre en oeuvre un décodage d'une séquence d'images source, codée par un codage mettant en oeuvre une décomposition mouvement/texture, produisant, pour au moins certaines desdites images source, des informations représentatives du mouvement, dites images de mouvement, et des informations représentatives de la texture, dites images de texture, et un codage par ondelettes,
**caractérisé en ce que**, ledit codage par ondelettes étant appliqué sur des images de différence, dites résidus, obtenues par comparaison entre une image de source et une image estimée correspondante, ledit programme d'ordinateur comprend des instructions pour effectuer :

- un décodage du mouvement, en tenant compte d'au moins certains desdits résidus relatifs au mouvement, pour former des images de mouvement ;
- un décodage de la texture, en tenant compte d'au moins certains desdits résidus relatifs à la texture, pour former des images de texture ;
- une synthèse d'une séquence d'images décodées, correspondant à ladite séquence d'images source, par projection desdites images de texture sur au moins une grille de référence correspondant auxdites images de mouvement, de façon à obtenir lesdites images décodées, sur lesquelles l'effet du mouvement a été restitué.

## Claims

1. Method of coding a sequence of source images, implementing a motion/texture decomposition, producing, for at least certain of the said source images, information representative of the motion, termed motion images, and information representative of the texture, termed texture images, and a wavelet coding,
said method comprising the following steps:

- estimation of the motion, so as to obtain the said motion images;
- projection of each of the said source images onto at least one reference grid, so as to obtain the said texture images, on which the effect of the motion has been cancelled;

**characterized in that** it also comprises the following steps:

- comparison between a motion image and a corresponding estimated image, so as to obtain a motion difference image, termed the motion residual;
- comparison between a texture image and a corresponding estimated image, so as to obtain a texture difference image;
- independent coding, by wavelets, of the said motion residuals and of the said texture residuals.

2. Method of coding according to Claim 1, **characterized in that** the said comparison implements a difference with an image interpolated on the basis of at least the first and/or of the last image of the said sequence.

3. Method of coding according to any one of Claims 1 and 2, **characterized in that** a temporal coding of the said texture is performed, rectified by the said motion previously coded along the temporal axis, with the aid of a wavelet coding.

4. Method of coding according to any one of Claims 1 to 3, **characterized in that** it comprises a coding of the texture comprising a temporal wavelet coding followed by a spatial wavelet coding.

5. Method of coding according to any one of Claims 1 to 4, **characterized in that** it comprises a coding of the motion taking account of a mesh.

**6.** Method of coding according to any one of Claims 1 to 5, **characterized in that** it comprises a coding of the motion comprising a temporal wavelet coding followed by a spatial wavelet coding.

**7.** Method of coding according to any one of Claims 1 to 6, **characterized in that** the said source images are grouped together in blocks of images comprising a variable number (N) of source images.

**8.** Method of coding according to Claim 7, **characterized in that** two successive blocks of images comprise at least one common image.

**9.** Method of coding according to any one of Claims 1 to 8, **characterized in that**, in each of the said blocks of images, the motion of all the images of a block of images is estimated on the basis of the first image of the said block.

**10.** Method of coding according to any one of Claims 1 to 9, **characterized in that** the said projection step uses two reference grids respectively representing the first and the last images of the relevant block.

**11.** Method of coding according to any one of Claims 1 to 10, **characterized in that** it comprises a step of projecting an image onto at least one reference grid, corresponding to a sampling grid defined by the position of the nodes of a mesh in an image, so as to obtain a texture mask, and a step of detecting at least one image support zone remaining undefined after the said projection of an image, on account of the use of a reference grid corresponding to another image, and a step of padding of the said undefined image support zone or zones.

**12.** Method of coding according to any one of Claims 1 to 11, **characterized in that** an antisymmetry is applied to the wavelet coefficients corresponding to an edge of an image, so as to simulate a signal with infinite length support.

**13.** Method of coding according to any one of Claims 1 to 12, **characterized in that** the data coded are distributed into at least two layers, a bottom layer comprising data making it possible to reconstruct an image of coarse quality and a top layer making it possible to refine the quality of the said coarse image.

**14.** Signal representative of a sequence of source images and obtained by a method of coding according to any one of Claims 1 to 13, and implementing a motion/texture decomposition, producing, for at least certain of the said source images, information representative of the motion, termed motion images, and information representative of the texture, termed texture images, and a wavelet coding,
**characterized in that** it comprises first digital data representative of a wavelet coding applied to motion difference images, termed motion residuals, obtained by comparison between a motion image and a corresponding estimated image,
and second digital data representative of a wavelet coding applied to texture difference images, termed texture residuals, obtained by comparison between a texture image and a corresponding estimated image, on which the effect of the motion has been cancelled,
the said first data being coded independently of the said second data.

**15.** Signal according to Claim 14, **characterized in that** it consists of at least two layers, a bottom layer comprising data making it possible to reconstruct an image of coarse quality and a top layer making it possible to refine the quality of the said coarse image.

**16.** Signal according to any one of Claims 14 and 15, **characterized in that** it comprises three fields for describing an object, which are representative respectively of its motion, its texture and its shape.

**17.** Method of decoding a sequence of source images, which is coded by a coding implementing a motion/texture decomposition, producing, for at least certain of the said source images, information representative of the motion, termed motion images, and information representative of the texture, termed texture images, and a wavelet coding, **characterized in that**, the said wavelet coding being applied to difference images, termed residuals, obtained by comparison between a source image and a corresponding estimated image it comprises the following steps:

- decoding of the motion, taking account of at least certain of the said residuals relating to the motion, so as to form motion images;
- decoding of the texture, while taking account of at least certain of the said residuals relating to texture, so as to form texture images;
- synthesis of a sequence of decoded images, corresponding to the said sequence of source images, by projecting the said texture images onto at least one reference grid corresponding to the said motion images, so as to obtain the said decoded images, on which the effect of the motion has been restored.

18. Method of decoding according to Claim 17, **characterized in that** it comprises a step measuring the quality of the said sequence of decoded images, by analysing the distortion between the original texture images and the decoded texture images.

19. Method of decoding according to any one of Claims 17 and 18, **characterized in that** it comprises a step of managing the reversals generated by the said motion estimation.

20. Method of decoding according to any one of Claims 17 to 19, **characterized in that** it comprises a step of stopping the processing of the said residuals, when a level of quality and/or a quantity of processing to be performed is reached.

21. Device for coding a sequence of source images, implementing a motion/texture decomposition, producing, for at least certain of the said source images, information representative of the motion, termed motion images, and information representative of the texture, termed texture images, and a wavelet coding, the said device comprising:

- means of estimation of the motion, so as to obtain the said motion images;
- means of projection of each of the said source images onto at least one reference grid, so as to obtain the said texture images, on which the effect of the motion has been cancelled;

**characterized in that** it also comprises :

- means of comparison between a motion image and a corresponding estimated image, so as to obtain a motion difference image, termed the motion residual;
- means of comparison between a texture image and a corresponding estimated image, so as to obtain a texture difference image;
- means of independent coding, by wavelets, of the said motion residuals and of the said texture residuals.

22. Method of decoding a sequence of source images, which is coded by coding implementing a motion/texture decomposition, producing, for at least certain of the said source images, information representative of the motion, termed motion images, and information representative of the texture, termed texture images, and a wavelet coding, **characterized in that**, the said wavelet coding being applied to difference images, termed residuals, obtained by comparison between a source image and a corresponding estimated image, it comprises :

- means of decoding of the motion, taking account of at least certain of the said residuals relating to the motion, so as to form motion images;
- means of decoding of the texture, taking account of at least certain of the said residuals relating to texture, so as to form texture images;
- means of synthesis of a sequence of decoded images, corresponding to the said sequence of source images, by projecting the said texture images onto at least one reference grid corresponding to the said motion images, so as to obtain the said decoded images, on which the effect of the motion has been restored.

23. Data server **characterized in that** it comprises means for implementing the method of coding according to any one of Claims 1 to 13.

24. Digital data support that can be read by a terminal, **characterized in that** it carries at least one signal according to any one of Claims 14 to 16, obtained with the aid of a method of coding according to any one of Claims 1 to 13.

25. Computer program, **characterized in that** it comprises instructions for implementing a coding of a sequence of source images, implementing a motion/texture decomposition, producing, for at least certain of the said source images, information representative of the motion, termed motion images, and information representative of the texture, termed texture images, and a wavelet coding, the said computer program comprising instructions for performing:

- estimation of the motion, so as to obtain the said motion images;
- projection of each of the said source images onto at least one reference grid, so as to obtain the said texture images, on which the effect of the motion has been cancelled;

**characterized in that** it also comprises instructions for performing:

- a comparison between a motion image and a corresponding estimated image, so as to obtain a motion difference image, termed the motion residual;
- a comparison between a texture image and a corresponding estimated image, so as to obtain a texture difference image;
- a independent coding, by wavelets, of the said motion residuals and of the said texture residuals.

26. Computer program, **characterized in that** it comprises instructions for implementing a decoding of a sequence of source images, coded by coding implementing a motion/texture decomposition, producing, for at least certain of the said source images, information representative of the motion, termed motion images, and information representative of the texture, termed texture images, and a wavelet coding,
**characterized in that**, the said wavelet coding being applied to difference images, termed residuals, obtained by comparison between a source image and a corresponding estimated image, the said computer program comprises instructions for performing:

- a decoding of the motion, taking account of at least certain of the said residuals relating to the motion, so as to form motion images;
- a decoding of the texture, taking account of at least certain of the said residuals relating to texture, so as to form texture images;
- a synthesis of a sequence of decoded images, corresponding to the said sequence of source images, by projecting the said texture images onto at least one reference grid corresponding to the said motion images, so as to obtain the said decoded images, on which the effect of the motion has been restored.

**Patentansprüche**

1. Verfahren zur Codierung einer Sequenz von Ursprungsbildern, das eine Bewegungs-/Texturzerlegung, die zumindest für bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
wobei das Verfahren die folgenden Schritte aufweist:

- Schätzung der Bewegung, um die Bewegungsbilder zu erhalten;
- Projektion jedes der Ursprungsbilder auf mindestens ein Referenzgitter, um die Texturbilder zu erhalten, bei denen die Wirkung der Bewegung annulliert wurde;

**dadurch gekennzeichnet, dass** es ebenfalls die folgenden Schritte aufweist:

- Vergleich zwischen einem Bewegungsbild und einem entsprechenden geschätzten Bild, um ein Bewegungs-Differenzbild, Bewegungsrest genannt, zu erhalten;
- Vergleich zwischen einem Texturbild und einem entsprechenden geschätzten Bild, um ein Textur-Differenzbild zu erhalten;
- unabhängige Wavelet-Codierung der Bewegungsreste und der Texturreste.

2. Codierverfahren nach Anspruch 1, **dadurch gekennzeichnet, dass** der Vergleich eine Differenz mit einem ausgehend von mindestens dem ersten und/oder dem letzten Bild der Sequenz interpolierten Bild anwendet.

3. Codierverfahren nach einem der Ansprüche 1 und 2, **dadurch gekennzeichnet, dass** eine zeitliche Codierung der durch die vorher gemäß der Zeitachse codierte Bewegung gerichteten Textur mit Hilfe einer Wavelet-Codierung durchgeführt wird.

4. Codierverfahren nach einem der Ansprüche 1 bis 3, **dadurch gekennzeichnet, dass** es eine Codierung der Textur aufweist, die eine zeitliche Wavelet-Codierung gefolgt von einer räumlichen Wavelet-Codierung enthält.

5. Codierverfahren nach einem der Ansprüche 1 bis 4, **dadurch gekennzeichnet, dass** es eine Codierung der Bewegung aufweist, die eine Vermaschung berücksichtigt.

6. Codierverfahren nach einem der Ansprüche 1 bis 5, **dadurch gekennzeichnet, dass** es eine Codierung der Bewegung aufweist, die eine zeitliche Wavelet-Codierung gefolgt von einer räumlichen Wavelet-Codierung enthält.

7. Codierverfahren nach einem der Ansprüche 1 bis 6, **dadurch gekennzeichnet, dass** die Ursprungsbilder in Blöcken von Bildern zusammengefasst sind, die eine variable Anzahl (N) von Ursprungsbildern enthalten.

8. Codierverfahren nach Anspruch 7, **dadurch gekennzeichnet, dass** zwei aufeinander folgende Bilderblöcke mindestens ein gemeinsames Bild aufweisen.

9. Codierverfahren nach einem der Ansprüche 1 bis 8, **dadurch gekennzeichnet, dass** in jedem der Bilderblöcke die Bewegung aller Bilder eines Bilderblocks ausgehend vom ersten Bild des Blocks geschätzt wird.

10. Codierverfahren nach einem der Ansprüche 1 bis 9, **dadurch gekennzeichnet, dass** der Projektionsschritt zwei Referenzgitter verwendet, die das erste bzw. das letzte Bild des betrachteten Blocks darstellen.

11. Codierverfahren nach einem der Ansprüche 1 bis 10, **dadurch gekennzeichnet, dass** es einen Schritt der Projektion eines Bilds auf mindestens ein Referenzgitter, entsprechend einem durch die Position der Knoten einer Vermaschung in einem Bild definierten Abtastgitter, um eine Texturmaske zu erhalten, und einen Schritt der Erfassung mindestens einer Bildträgerzone, die nach der Projektion eines Bilds aufgrund der Verwendung eines einem anderen Bild entsprechenden Referenzgitters undefiniert bleibt, und einen Füllschritt ("padding") der undefinierten Bildträgerzone (n) aufweist.

12. Codierverfahren nach einem der Ansprüche 1 bis 11, **dadurch gekennzeichnet, dass** eine Antisymmetrie an die Wavelet-Koeffizienten angewendet wird, die einem Rand eines Bilds entsprechen, um ein Signal mit einem Träger unendlicher Länge zu simulieren.

13. Codierverfahren nach einem der Ansprüche 1 bis 12, **dadurch gekennzeichnet, dass** die codierten Daten in mindestens zwei Schichten verteilt werden, einer unteren Schicht, die Daten enthält, die es ermöglichen, ein Bild grober Qualität zu rekonstruieren, und einer oberen Schicht, die es ermöglicht, die Qualität des groben Bilds zu verfeinern.

14. Signal, das für eine Sequenz von Ursprungsbildern repräsentativ ist und durch ein Codierverfahren nach einem der Ansprüche 1 bis 13 erhalten wird, das eine Bewegungs-/Texturzerlegung, die zumindest für bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
**dadurch gekennzeichnet, dass** es erste digitale Daten aufweist, die für eine Wavelet-Codierung repräsentativ sind, die an Bewegungs-Differenzbilder, Bewegungsreste genannt, angewendet wird, die durch Vergleich zwischen einem Bewegungsbild und einem entsprechenden geschätzten Bild erhalten werden,
und zweite digitale Daten aufweist, die für eine Wavelet-Codierung repräsentativ sind, die an Textur-Differenzbilder, Texturreste genannt, angewendet wird, die durch Vergleich zwischen einem Texturbild und einem entsprechenden geschätzten Bild erhalten werden, bei denen die Wirkung der Bewegung annulliert wurde,
wobei die ersten Daten unabhängig von den zweiten Daten codiert werden.

15. Signal nach Anspruch 14, **dadurch gekennzeichnet, dass** es aus mindestens zwei Schichten besteht, einer unteren Schicht, die Daten enthält, die es ermöglichen, ein Bild grober Qualität zu rekonstruieren, und einer oberen Schicht, die es ermöglicht, die Qualität des groben Bilds zu verfeinern.

16. Signal nach einem der Ansprüche 14 und 15, **dadurch gekennzeichnet, dass** es drei Felder aufweist, um einen Gegenstand zu beschreiben, die für seine Bewegung, seine Textur bzw. seine Form repräsentativ sind.

17. Verfahren zur Decodierung einer Sequenz von Ursprungsbildern, die durch eine Codierung codiert ist, die eine Bewegungs-/Texturzerlegung, die zumindest für bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
**dadurch gekennzeichnet, dass** es, da die Wavelet-Codierung an Differenzbilder, Reste genannt, angewendet wird, die durch Vergleich zwischen einem Ursprungsbild und einem entsprechenden geschätzten Bild erhalten werden, die folgenden Schritte aufweist:

- Decodierung der Bewegung unter Berücksichtigung mindestens bestimmter der Reste bezüglich der Bewegung, um Bewegungsbilder zu formen;
- Decodierung der Textur unter Berücksichtigung mindestens bestimmter der Reste bezüglich der Textur, um Texturbilder zu formen;
- Synthese einer Sequenz von decodierten Bildern, die der Sequenz von Ursprungsbildern entspricht, durch Projektion der Texturbilder auf mindestens ein Referenzgitter entsprechend den Bewegungsbildern, um die decodierten Bilder zu erhalten, bei denen die Bewegungswirkung wiederhergestellt wurde.

18. Decodierverfahren nach Anspruch 17, **dadurch gekennzeichnet, dass** es einen Schritt der Messung der Qualität der Sequenz von decodierten Bildern durch Analyse der Verzerrung zwischen den Original-Texturbildern und den decodierten Texturbildern aufweist.

19. Decodierverfahren nach einem der Ansprüche 17 und 18, **dadurch gekennzeichnet, dass** es einen Schritt der Verwaltung der Umkehrungen enthält, die durch die Schätzung der Bewegung erzeugt werden.

20. Decodierverfahren nach einem der Ansprüche 17 bis 19, **dadurch gekennzeichnet, dass** es einen Schritt des Beendens der Verarbeitung der Reste aufweist, wenn ein Qualitätspegel und/oder eine Menge von durchzuführenden Verarbeitungen erreicht ist.

21. Vorrichtung zur Codierung einer Sequenz von Ursprungsbildern, die eine Bewegungs-/Texturzerlegung, die für mindestens bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
wobei die Vorrichtung aufweist:

- Mittel zur Schätzung der Bewegung, um die Bewegungsbilder zu erhalten;
- Mittel zur Projektion jedes der Ursprungsbilder auf mindestens ein Referenzgitter, um die Texturbilder zu erhalten, bei denen die Wirkung der Bewegung annulliert wurde;

**dadurch gekennzeichnet, dass** sie ebenfalls aufweist:

- Mittel zum Vergleich zwischen einem Bewegungsbild und einem entsprechenden geschätzten Bild, um ein Bewegungs-Differenzbild, Bewegungsrest genannt, zu erhalten;
- Mittel zum Vergleich zwischen einem Texturbild und einem entsprechenden geschätzten Bild, um ein Textur-Differenzbild zu erhalten;
- Mittel zur unabhängigen Wavelet-Codierung der Bewegungsreste und der Texturreste.

22. Vorrichtung zur Decodierung einer Sequenz von Ursprungsbildern, die durch eine Codierung codiert ist, die eine Bewegungs-/Texturzerlegung, die für mindestens bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
**dadurch gekennzeichnet, dass** sie, da die Wavelet-Codierung an Differenzbilder, Reste genannt, angewendet wird, die durch Vergleich zwischen einem Ursprungsbild und einem entsprechenden geschätzten Bild erhalten werden, aufweist:

- Mittel zur Decodierung der Bewegung unter Berücksichtigung mindestens bestimmter der Reste bezüglich der Bewegung, um Bewegungsbilder zu formen;
- Mittel zur Decodierung der Textur unter Berücksichtigung mindestens bestimmter der Reste bezüglich der Textur, um Texturbilder zu formen;
- Mittel zur Synthese einer Sequenz von decodierten Bildern, die der Sequenz von Ursprungsbildern entspricht, durch Projektion der Texturbilder auf mindestens ein Referenzgitter entsprechend den Bewegungsbildern, um die decodierten Bilder zu erhalten, bei denen die Bewegungswirkung wiederhergestellt wurde.

23. Datenserver, **dadurch gekennzeichnet, dass** er Mittel aufweist, um das Codierverfahren nach einem der Ansprüche 1 bis 13 anzuwenden.

24. Digitaler Datenträger, der von einem Terminal gelesen werden kann, **dadurch gekennzeichnet, dass** er mindestens ein Signal nach einem der Ansprüche 14 bis 16 trägt, das mit Hilfe eines Codierverfahrens nach einem der Ansprüche 1 bis 13 erhalten wurde.

**25.** Computerprogramm, **dadurch gekennzeichnet, dass** es Befehle enthält, um eine Codierung einer Sequenz von Ursprungsbildern anzuwenden, die eine Bewegungs-/Texturzerlegung, die für mindestens bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
wobei das Computerprogramm Befehle enthält, um durchzuführen:

- eine Schätzung der Bewegung, um die Bewegungsbilder zu erhalten;
- eine Projektion jedes der Ursprungsbilder auf mindestens ein Referenzgitter, um die Texturbilder zu erhalten, bei denen die Wirkung der Bewegung annulliert wurde;

**dadurch gekennzeichnet, dass** es ebenfalls Befehle enthält, um durchzuführen:

- einen Vergleich zwischen einem Bewegungsbild und einem entsprechenden geschätzten Bild, um ein Bewegungs-Differenzbild, Bewegungsrest genannt, zu erhalten;
- einen Vergleich zwischen einem Texturbild und einem entsprechenden geschätzten Bild, um ein Textur-Differenzbild zu erhalten;
- eine unabhängige Wavelet-Codierung der Bewegungsreste und der Texturreste.

**26.** Computerprogramm, **dadurch gekennzeichnet, dass** es Befehle enthält, um eine Decodierung einer Sequenz von Ursprungsbildern anzuwenden, die durch eine Codierung codiert ist, die eine Bewegungs-/Texturzerlegung, die zumindest für bestimmte der Ursprungsbilder für die Bewegung repräsentative Informationen, Bewegungsbilder genannt, und für die Textur repräsentative Informationen, Texturbilder genannt, erzeugt, und eine Wavelet-Codierung anwendet,
**dadurch gekennzeichnet, dass**, da die Wavelet-Codierung an Differenzbilder, Reste genannt, angewendet wird, die durch Vergleich zwischen einem Ursprungsbild und einem entsprechenden geschätzten Bild erhalten werden, das Computerprogramm Befehle enthält, um durchzuführen:

- eine Decodierung der Bewegung unter der Berücksichtigung mindestens bestimmter der Reste bezüglich der Bewegung, um Bewegungsbilder zu formen;
- eine Decodierung der Textur unter Berücksichtigung mindestens bestimmter der Reste bezüglich der Textur, um Texturbilder zu formen;
- eine Synthese einer Sequenz von decodierten Bildern, die der Sequenz von Ursprungsbildern entspricht, durch Projektion der Texturbilder auf mindestens ein Referenzgitter entsprechend den Bewegungsbildern, um die decodierten Bilder zu erhalten, bei denen die Bewegungswirkung wiederhergestellt wurde.

Fig. 1

EP 1 604 529 B1

GOP de N images ~~~~ 11

| Initialisation maillage sur t=1 | ~~~~ 121

| Estimation mouvement  t vers t+1 | ~~~~ 122

| Raffinement mouvement  1 vers t+1 | ~~~~ 123

124 ~~~~ | t=N ? | → | non | ~~~~ 125

13

14

15 ~~~~

126 ~~~~ | oui | → | Codage mouvement | → | Décodage mouvement | → | Plaquage sur grilles de référence 1 et N |

131 ~~~~

132 ~~~~

161

18

16

| Bitstream mouvement bas | | Bitstream mouvement haut |

| Padding  3D |

17

| Bitstream texture bas |

| Codage texture |

162

171 ~~~~

| Bitstream scalable | ← | Formation train binaire | ← | Bitstream texture haut |

Fig. 2

30

niveau 0

32

niveau 2

33

niveau 3

35

niveau 5

Fig. 3

Fig. 4

EP 1 604 529 B1

Fig. 5

46

Approximation niveau fin $a_f = 0$

Signal niveau fin $s$

61 — Analyse : décomposition en basses fréquences au niveau n : $\hat{s}_g$

62 — Synthèse : prolongement des basses fréquences du niveau n au niveau fin : $\hat{s}_f$

$a_f = +, \hat{s}_f$ — 67

63 — Calcul résidu au niveau fin : $s - \hat{s}_f$

65 — N = niveau fin ?

non

oui

64 — Prolongement résidu au niveau n

66 — Mise à jour du signal initial $s$ à partir de l'approximation finale $a_f$

Fig. 6

Fig. 7A

Fig. 7B

Fig. 7C

Fig. 7D

Fig. 7F

Fig. 7E

Fig. 8

Fig. 9

EP 1 604 529 B1

Image originale : Io

288

352

Calcul de
l'image moyenne

1x1 bloc

101

102

512

Image moyenne
niveau 1 : Imoy1

512

105

I1 = Io - Imoy1

103

Calcul de
l'image moyenne

2x2 blocs

Imoy2

104

Imoy1 + Imoy2

I2 = Io - (Imoy1+Imoy2)

106

Calcul de
l'image moyenne

4x4 blocs

Imoy3

Imoy1 + Imoy2
+ Imoy3

Fig. 10

EP 1 604 529 B1

N Images de textures  121

rend un flux

non ◁——— GOP INTRA ? ———▷ oui

125

Récupération dernière image
du GOP précédent

123

Codage première image
en mode Intra  122

124  128

Prédiction dernière image ◀——— Décodage première image

Codage erreur de prédiction  126

Calcul résidu codage

Prédiction par interpolation
des images intermédiaires

127

Décodage dernière image ———▷  1212  1210  129

Calcul des résidus

Calcul résidu codage

1211

Transformée ondelette temporelle des résidus

1213  Transformée ondelette spatiale des résidus et sous-bandes temporelles

1214  Codage par plans de bits des sous-bandes spatio-temporelles

Fig. 12

EP 1 604 529 B1

EP 1 604 529 B1

N-1 champs discret de mouvement — 131

Prédiction des positions de la dernière image

— 132

Remontée des valeurs vers les niveaux inférieurs

— 133

Quantification des valeurs

— 134

Codage arithmétique par niveaux hiérarchiques

Décodage des positions dans la dernière image

135

rend un flux

136

Prédiction par interpolation des positions des images intermédiaires

— 137

Calcul des résidus

138

Transformée ondelette temporelle des résidus

139 — Transformation en mouvement ondelette des résidus

1310 — Optimisation débit/distorsion

1311 — Codage arithmétique des plans de bits

Fig. 13

Fig. 14

Fig. 11

Image t+1
Sommets fusionnés

Image t+1
OVERLAPPED

Fig. 15

Image t

EP 1 604 529 B1

Fig. 18

Fig. 16

57

Fig. 17

Grille grossière

Grille fine

Fig. 19

EP 1 604 529 B1

Fig. 20

Fig. 21

Fig. 22

EP 1 604 529 B1

Fig. 23

propagation + raffinement

propagation + raffinement

raffinement

propagation

raffinement

propagation

$t_0$

$t_1$

$t_2$

Fig. 24

Fig. 25

Fig. 26

Fig. 27

Fig. 28

Image t+1

Image filtrée t

ESTIMATION MOUVEMENT

Maillage estimé t+1

RAFFINEMENT MOUVEMENT

Maillage final t+1

MEM

Maillage t

MEM

Image t

FILTRAGE IMAGE T

Maillage instant t0

Image t0 (filtrée/non-filtrée)

EP 1 604 529 B1

Fig. 29

Video frames

New frame

First frame

Mosaick initialization

Motion estimation

Mosaicking updating

MOSAICK - EVOLUTION THROUGH TIME

EP 1 604 529 B1

Fig. 30

EP 1 604 529 B1

Séquence vidéo

time

Découpage en GOP

GOP Intra    Image partagée    GOP Inter    Image partagée    GOP inter

Couche basse

| Première image Intra |
| Dernière image Inter |
| Mouvement dernière image |

| Dernière image Inter |
| Mouvement dernière image |

| Dernière image Inter |
| Mouvement dernière image |

Couche haute scalable

| Raffinement Texture | Raffinement Mouvement |

| Raffinement Texture | Raffinement Mouvement |

| Raffinement Texture | Raffinement Mouvement |

Fig. 31

EP 1 604 529 B1